# EUROPEAN PATENT APPLICATION

(11) **EP 4 787 701 A1**
(43) Date of publication of application: **05.08.2026**
(21) Application number: 24871807.4
(22) Date of filing: 09.09.2024
(51) Int. Cl.: H02M 7/48, H02M 7/487

(54) **POWER CONVERSION DEVICE**

(30) Priority: 29.09.2023 JP 2023170942
(71) Applicant: Panasonic Intellectual Property Management Co., Ltd., Kadoma-shi, Osaka 571-0057 (JP)
(72) Inventor: HIGASHIYAMA, Koji, Kadoma-shi, Osaka 571-0057 (JP); KAMON, Yutaka, Kadoma-shi, Osaka 571-0057 (JP); ARAI, Yasuhiro, Kadoma-shi, Osaka 571-0057 (JP)
(74) Representative: Novagraaf International SA
(86) International application number: PCT/JP2024/032155
(87) International publication number: WO 2025/070009

(57) **Abstract**

Disclosed herein is a technique for realizing zero-voltage soft switching without having a controller directly control a plurality of switches provided for the purpose of making zero-voltage soft switching. A controller (51) sets, with respect to each of a plurality of switching circuits (10), a second dead time period between a high-level period of a first control signal for a first switching element (1) and a high-level period of a first control signal for a second switching element (2). The second dead time period is defined by adding a predetermined amount of time to a first dead time period. The first dead time period has been set in advance to prevent respective ON periods of the first switching element (1) and the second switching element (2) from overlapping with each other. The predetermined amount of time is determined based on a current value of a load current, inductance of a resonant inductor (L1), and a voltage value of a regenerative capacitor (15). A signal generator circuit (52) generates, with respect to each of a plurality of switches (8), a second control signal having a high-level period adapted to the second dead time period for a corresponding one of the plurality of switching circuits (10).

## Description

### Technical Field

The present disclosure generally relates to a power converter. More particularly, the present disclosure relates to a power converter having the ability to convert DC power into AC power.

### Background Art

Patent Literature 1 discloses a power conversion system.

The power conversion system (power converter) of Patent Literature 1 includes: a switching means including a pair of main switch elements (first switching element and second switching element) which are connected to each other in series; an auxiliary circuit for making soft switching of the respective main switch elements; and a controller. The auxiliary circuit includes two capacitors, a coil (resonant inductor), and a plurality of auxiliary switch elements. The controller generates control signals (first control signals) for performing PWM control on the respective main switch elements and outputs the control signals to the respective gates of the main switch elements. In addition, the controller also generates a control signal (second control signal) for controlling the ON/OFF states of the respective auxiliary switch elements and outputs the control signal to the respective gates of the auxiliary switch elements.

### Citation List

### Patent Literature

Patent Literature 1: JP 2010-233306 A

### Summary of Invention

In the power conversion system (power converter) of Patent Literature 1, its controller needs to generate and output a plurality of first control signals and a plurality of second control signals, and therefore, comes to have an increased size. In addition, the power conversion system of Patent Literature 1 is configured to perform zero-current soft switching, not configured to make zero-voltage soft switching.

An object of the present disclosure is to provide a power converter having the ability to realize zero-voltage soft switching without having its controller directly control a plurality of switches provided for the purpose of making zero-voltage soft switching.

A power converter according to an aspect of the present disclosure includes a first DC terminal and a second DC terminal, a power converter circuit, a plurality of AC terminals, a plurality of switches, a plurality of resonant capacitors, at least one resonant inductor, a regenerative capacitor, a controller, and a signal generator circuit. The power converter circuit includes a plurality of first switching elements and a plurality of second switching elements. In the power converter circuit, a plurality of switching circuits, in each of which one of the plurality of first switching elements and a corresponding one of the plurality of second switching elements are connected one to one in series, are connected to each other in parallel. In the power converter circuit, the plurality of first switching elements are connected to the first DC terminal. In the power converter circuit, the plurality of second switching elements are connected to the second DC terminal. The plurality of AC terminals are provided one to one for the plurality of switching circuits. Each of the plurality of AC terminals is connected to a connection node between the first switching element and the second switching element of a corresponding one of the plurality of switching circuits. Each of the plurality of AC terminals causes a load current to flow therethrough. The plurality of switches are provided one to one for the plurality of switching circuits. Each of the plurality of switches has a first end and a second end. Each of the plurality of switches has the first end thereof connected to the connection node between the first switching element and the second switching element of a corresponding one of the plurality of switching circuits. The plurality of resonant capacitors are provided one to one for the plurality of switches. Each of the plurality of resonant capacitors is connected between the first end of a corresponding one of the plurality of switches and the second DC terminal. The at least one resonant inductor has a third end and a fourth end. In the at least one resonant inductor, the third end thereof is connected to the second end of a corresponding one of the plurality of switches. The regenerative capacitor has a fifth end and a sixth end. In the regenerative capacitor, the fifth end thereof is connected to the second DC terminal, and the sixth end thereof is connected to the fourth end of the at least one resonant inductor. The controller applies a first control signal, of which a potential level alternates between high level and low level, to each of the plurality of first switching elements and the plurality of second switching elements. The signal generator circuit applies a second control signal, of which a potential level alternates between high level and low level, to each of the plurality of switches. The controller sets, with respect to each of the plurality of switching circuits, a second dead time period between a high-level period of the first control signal for the first switching element and a high-level period of the first control signal for the second switching element. The second dead time period is defined by adding a predetermined amount of time to a first dead time period. The first dead time period has been set in advance to prevent respective ON periods of the first switching element and the second switching element from overlapping with each other. The predetermined amount of time is determined based on a current value of the load current, inductance of the at least one resonant inductor, and a voltage value of the regenerative capacitor. The signal generator circuit generates, with respect to each of the plurality of switches, the second control signal having a high-level period adapted to the second dead time period for a corresponding one of the plurality of switching circuits.

The power converter according to the present disclosure achieves the advantage of realizing zero-voltage soft switching without having its controller directly control a plurality of switches provided for the purpose of making zero-voltage soft switching.

### Brief Description of Drawings

[FIG. 1] FIG. 1 is a circuit diagram of a system including a power converter according to a first embodiment;
[FIG. 2] FIG. 2 is a circuit block diagram of a signal generator circuit included in the power converter according to the first embodiment;
[FIG. 3] FIG. 3 shows how duties and load currents, respectively corresponding to three-phase voltage instructions in an AC load connected to a plurality of AC terminals of the power converter according to the first embodiment, change with time;
[FIG. 4] FIG. 4 is a timing chart illustrating how the power converter according to the first embodiment operates;
[FIG. 5] FIG. 5 is a timing chart illustrating how the power converter according to the first embodiment operates;
[FIG. 6] FIG. 6 is a timing chart illustrating how the power converter according to the first embodiment operates;
[FIG. 7] FIG. 7 illustrates how the power converter according to the first embodiment operates in a situation where the polarity of a U-phase load current is positive;
[FIG. 8] FIG. 8 illustrates how the power converter according to the first embodiment operates in a first period;
[FIG. 9] FIG. 9 illustrates how the power converter according to the first embodiment operates in a second period;
[FIG. 10] FIG. 10 illustrates how the power converter according to the first embodiment operates in a third period;
[FIG. 11] FIG. 11 illustrates how the power converter according to the first embodiment operates in a situation where the polarity of the U-phase load current is negative;
[FIG. 12] FIG. 12 is a circuit diagram of a system including a power converter according to a second embodiment;
[FIG. 13] FIG. 13 is a circuit block diagram of a signal generator circuit included in the power converter according to the second embodiment;
[FIG. 14] FIG. 14 illustrates how the power converter according to the second embodiment operates in a situation where the polarity of a U-phase load current is positive;
[FIG. 15] FIG. 15 illustrates how the power converter according to the second embodiment operates in a third period;
[FIG. 16] FIG. 16 illustrates how the power converter according to the second embodiment operates in a situation where the polarity of the U-phase load current is negative;
[FIG. 17] FIG. 17 is a circuit diagram of a system including a power converter according to a third embodiment;
[FIG. 18] FIG. 18 illustrates how the power converter according to the third embodiment operates in a situation where the polarity of a U-phase load current is positive;
[FIG. 19] FIG. 19 illustrates how the power converter according to the third embodiment operates in a situation where the polarity of the U-phase load current is negative;
[FIG. 20] FIG. 20 is a circuit diagram of a system including a power converter according to a fourth embodiment;
[FIG. 21] FIG. 21 illustrates how the power converter according to the fourth embodiment operates in a situation where the polarity of a U-phase load current is positive;
[FIG. 22] FIG. 22 illustrates how the power converter according to the fourth embodiment operates in a situation where the polarity of the U-phase load current is negative;
[FIG. 23] FIG. 23 is a circuit diagram of a system including a power converter according to a fifth embodiment;
[FIG. 24] FIG. 24 illustrates how the power converter according to the fifth embodiment operates in a situation where the polarity of a U-phase load current is positive;
[FIG. 25] FIG. 25 illustrates how the power converter according to the fifth embodiment operates in a situation where the polarity of the U-phase load current is negative;
[FIG. 26] FIG. 26 is a circuit diagram of a system including a power converter according to a sixth embodiment;
[FIG. 27] FIG. 39 is a circuit diagram of a system including a power converter according to a seventh embodiment;
[FIG. 28] FIG. 28 is a circuit diagram of a system including a power converter according to an eighth embodiment;
[FIG. 29] FIG. 29 is a circuit diagram of a system including a power converter according to a ninth embodiment;
[FIG. 30] FIG. 30 is a circuit diagram of a system including a power converter according to a tenth embodiment;
[FIG. 31] FIG. 31 is a circuit diagram of a system including a power converter according to an eleventh embodiment.
[FIG. 32] FIG. 32 is a circuit diagram of a system including a power converter according to a twelfth embodiment;
[FIG. 33] FIG. 33 is a circuit diagram of a system including a power converter according to a thirteenth embodiment; and
[FIG. 34] FIG. 34 is a circuit diagram of a system including a power converter according to a fourteenth embodiment.

### Description of Embodiments

### (First embodiment)

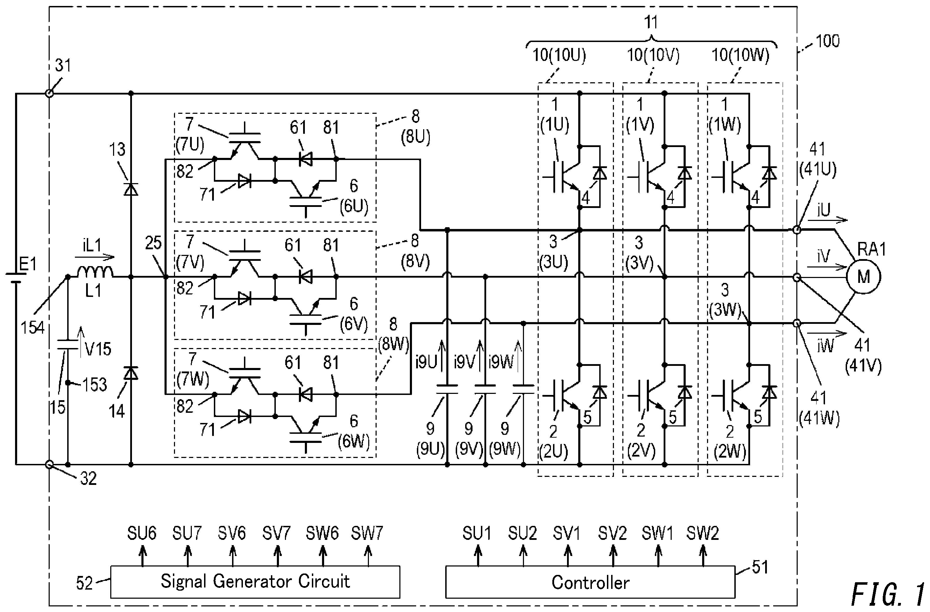

A power converter 100 according to a first embodiment will be described with reference to FIGS. 1-11.

### (1) Overall configuration for power converter

FIG. 1 is a circuit diagram of a system including a power converter 100 according to a first embodiment. The power converter 100 includes a first DC terminal 31 and a second DC terminal 32, and a plurality of (e.g., three) AC terminals 41 as shown in FIG. 1, for example. A DC power supply E1 is connected between the first DC terminal 31 and the second DC terminal 32. An AC load RA1 is connected to the plurality of AC terminals 41. The AC load RA1 may be, for example, a three-phase servo motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter. In the power converter 100, if the plurality of AC terminals 41 are three AC terminals 41, then the AC power may be, for example, three-phase AC power having U-, V-, and W-phases.

The power converter 100 includes a power converter circuit 11, a plurality of (e.g., three) switches 8, a plurality of (e.g., three) resonant capacitors 9, a resonant inductor L1, a regenerative capacitor 15, a controller 51, and a signal generator circuit 52. Each of the plurality of switches 8 may be, for example, a bidirectional switch. The power converter 100 further includes a first clamping diode 13 and a second clamping diode 14.

The power converter circuit 11 includes a plurality of (e.g., three) first switching elements 1 and a plurality of (e.g., three) second switching elements 2. In the power converter circuit 11, a plurality of (e.g., three) switching circuits 10, in each of which one of the plurality of first switching elements 1 and a corresponding one of the plurality of second switching elements 2 are connected one to one in series, are connected in parallel. In the power converter circuit 11, the plurality of first switching elements 1 are connected to the first DC terminal 31 and the plurality of second switching elements 2 are connected to the second DC terminal 32.

The plurality of AC terminals 41 are provided one to one for the plurality of switching circuits 10. Each of the plurality of AC terminals 41 is connected to a connection node 3 between the first switching element 1 and the second switching element 2 of a corresponding one of the plurality of switching circuits 10.

The plurality of switches 8 are provided one to one for the plurality of switching circuits 10. Each of the plurality of switches 8 has a first end 81 and a second end 82. Each of the plurality of switches 8 has the first end 81 thereof connected to the connection node 3 between the first switching element 1 and the second switching element 2 of a corresponding one of the plurality of switching circuits 10.

The plurality of resonant capacitors 9 are provided one to one for the plurality of switches 8. Each of the plurality of resonant capacitors 9 is connected between the first end 81 of a corresponding one of the plurality of switches 8 and the second DC terminal 32.

The resonant inductor L1 has a third end and a fourth end. In the resonant inductor L1, the third end thereof is connected to the respective second ends 82 of corresponding switches 8 (e.g., three switches 8 in the first embodiment) out of the plurality of switches 8.

The regenerative capacitor 15 has a fifth end 153 and a sixth end 154. In the regenerative capacitor 15, the fifth end 153 thereof is connected to the second DC terminal 32 and the sixth end 154 thereof is connected to the fourth end of the resonant inductor L1.

The controller 51 applies a first control signal to each of the plurality of first switching elements 1 and the plurality of second switching elements 2.

The signal generator circuit 52 applies a second control signal to each of the plurality of switches 8.

### (2) Details of power converter

In the following description, as for the plurality of switching circuits 10, the switching circuits 10 for the U-, V, and W-phases will be hereinafter sometimes referred to as a "switching circuit 10U," a "switching circuit 10V," and a "switching circuit 10W," respectively, for the sake of convenience of description. Also, in the following description, the first switching element 1 and second switching element 2 of the switching circuit 10U will be hereinafter sometimes referred to as a "first switching element 1U" and a "second switching element 2U," respectively. Also, in the following description, the first switching element 1 and second switching element 2 of the switching circuit 10V will be hereinafter sometimes referred to as a "first switching element 1V" and a "second switching element 2V," respectively. Also, in the following description, the first switching element 1 and second switching element 2 of the switching circuit 10W will be hereinafter sometimes referred to as a "first switching element 1W" and a "second switching element 2W," respectively. Furthermore, in the following description, the connection node 3 between the first switching element 1U and the second switching element 2U will be hereinafter sometimes referred to as a "connection node 3U," the connection node 3 between the first switching element 1V and the second switching element 2V will be hereinafter sometimes referred to as a "connection node 3V," and the connection node 3 between the first switching element 1W and the second switching element 2W will be hereinafter sometimes referred to as a "connection node 3W." Furthermore, in the following description, the AC terminal 41 connected to the connection node 3U will be hereinafter sometimes referred to as an "AC terminal 41U," the AC terminal 41 connected to the connection node 3V will be hereinafter sometimes referred to as an "AC terminal 41V," and the AC terminal 41 connected to the connection node 3W will be hereinafter sometimes referred to as an "AC terminal 41W." Furthermore, in the following description, the resonant capacitor 9 connected to the second switching element 2U in parallel will be hereinafter sometimes referred to as a "resonant capacitor 9U," the resonant capacitor 9 connected to the second switching element 2V in parallel will be hereinafter sometimes referred to as a "resonant capacitor 9V," and the resonant capacitor 9 connected to the second switching element 2W in parallel will be hereinafter sometimes referred to as a "resonant capacitor 9W." Furthermore, in the following description, the switch 8 connected to the connection node 3U will be hereinafter sometimes referred to as a "switch 8U," the switch 8 connected to the connection node 3V will be hereinafter sometimes referred to as a "switch 8V," and the switch 8 connected to the connection node 3W will be hereinafter sometimes referred to as a "switch 8W."

In the power converter 100, the higher-potential output terminal (positive electrode) of the DC power supply E1, for example, is connected to the first DC terminal 31, and the lower-potential output terminal (negative electrode) of the DC power supply E1, for example, is connected to the second DC terminal 32. Also, in the power converter 100, the U-, V-, and W-phase terminals of the AC load RA1 are connected to the three AC terminals 41U, 41V, and 41W, respectively, for example.

In the power converter circuit 11, each of the plurality of (e.g., three) first switching elements 1 and the plurality of (e.g., three) second switching elements 2 has a control terminal, a first main terminal, and a second main terminal. The respective control terminals of the plurality of first switching elements 1 and the plurality of second switching elements 2 are connected to the controller 51. In each of the plurality of switching circuits 10 of the power converter 100, the first main terminal of the first switching element 1 is connected to the first DC terminal 31, the second main terminal of the first switching element 1 is connected to the first main terminal of the second switching element 2, and the second main terminal of the second switching element 2 is connected to the second DC terminal 32. In each of the plurality of switching circuits 10, the first switching element 1 is a high-side switching element (P-side switching element) and the second switching element 2 is a low-side switching element (N-side switching element). Each of the plurality of first switching elements 1 and the plurality of second switching elements 2 may be, for example, an insulated gate bipolar transistor (IGBT). Thus, in each of the plurality of first switching elements 1 and the plurality of second switching elements 2, the control terminal, the first main terminal, and the second main terminal thereof are a gate terminal, a collector terminal, and an emitter terminal, respectively.

The power converter circuit 11 further includes a plurality of (e.g., three) first diodes 4 which are connected one to one to the plurality of (e.g., three) first switching elements 1 in antiparallel and a plurality of (e.g., three) second diodes 5 which are connected one to one to the plurality of (e.g., three) second switching elements 2 in antiparallel. In each of the plurality of first diodes 4, the anode of the first diode 4 is connected to the second main terminal (emitter terminal) of the first switching element 1 corresponding to the first diode 4, and the cathode of the first diode 4 is connected to the first main terminal (collector terminal) of the first switching element 1 corresponding to the first diode 4. In each of the plurality of second diodes 5, the anode of the second diode 5 is connected to the second main terminal (emitter terminal) of the second switching element 2 corresponding to the second diode 5, and the cathode of the second diode 5 is connected to the first main terminal (collector terminal) of the second switching element 2 corresponding to the second diode 5.

The U-phase terminal of the AC load RA1 may be connected, for example, to the connection node 3U between the first switching element 1U and the second switching element 2U via the AC terminal 41U. The V-phase of the AC load RA1 may be connected, for example, to the connection node 3V between the first switching element 1V and the second switching element 2V via the AC terminal 41V. The W-phase of the AC load RA1 may be connected, for example, to the connection node 3W between the first switching element 1W and the second switching element 2W via the AC terminal 41W.

The plurality of resonant capacitors 9 are provided one to one for the plurality of switches 8. Each of the plurality of resonant capacitors 9 is connected between the first end 81 of a corresponding one of the switches 8 and the second DC terminal 32. The power converter 100 includes a plurality of resonant circuits. Each of the plurality of resonant circuits includes the resonant capacitor 9 and the resonant inductor L1.

Each of the plurality of switches 8 includes a third switching element 6 and a fourth switching element 7. Each of the plurality of (e.g., three in the example illustrated in FIG. 1) third switching elements 6 and the plurality of (e.g., three in the example illustrated in FIG. 1) fourth switching elements 7 has a control terminal, a first main terminal, and a second main terminal. The respective control terminals of the plurality of third switching elements 6 and the plurality of fourth switching elements 7 are connected to the signal generator circuit 52. Each of the plurality of third switching elements 6 and the plurality of fourth switching elements 7 may be, for example, an IGBT. Thus, in each of the plurality of third switching elements 6 and the plurality of fourth switching elements 7, the control terminal, the first main terminal, and the second main terminal thereof are a gate terminal, a collector terminal, and an emitter terminal, respectively. In each of the plurality of switches 8, the third switching element 6 and the fourth switching element 7 are connected to each other in anti-series. In each of the plurality of switches 8, the first main terminal (collector terminal) of the third switching element 6 and the first main terminal (collector terminal) of the fourth switching element 7 are connected to each other. In each of the plurality of switches 8, the second main terminal (emitter terminal) of the third switching element 6 is connected to the connection node 3 of a corresponding one of the plurality of switching circuits10, and the second main terminal (emitter terminal) of the fourth switching element 7 is connected to the resonant inductor L1. In addition, each of the plurality of switches 8 further includes a diode 61 which is connected to the third switching element 6 in antiparallel and a diode 71 which is connected to the fourth switching element 7 in antiparallel.

In the power converter 100, the switch 8U is connected to the connection node 3U between the first switching element 1U and the second switching element 2U. The switch 8V is connected to the connection node 3V between the first switching element 1V and the second switching element 2V. The switch 8W is connected to the connection node 3W between the first switching element 1W and the second switching element 2W. In the following description, the third switching element 6 and fourth switching element 7 of the switch 8U will be hereinafter sometimes referred to as a "third switching element 6U" and a "fourth switching element 7U," respectively, the third switching element 6 and fourth switching element 7 of the switch 8V will be hereinafter sometimes referred to as a "third switching element 6V" and a "fourth switching element 7V," respectively, and the third switching element 6 and fourth switching element 7 of the switch 8W will be hereinafter sometimes referred to as a "third switching element 6W" and a "fourth switching element 7W," respectively, for the sake of convenience of description.

The plurality of switches 8 are controlled by the signal generator circuit 52. In other words, the third switching element 6U, the fourth switching element 7U, the third switching element 6V, the fourth switching element 7V, the third switching element 6W, and the fourth switching element 7W are controlled by the signal generator circuit 52.

The resonant inductor L1 has a third end and a fourth end. In the resonant inductor L1, the third end of the resonant inductor L1 is connected to the respective second ends 82 of the plurality of switches 8. In the first embodiment, the third end of the resonant inductor L1 is connected to the common connection node 25, to which the respective second ends 82 of the plurality of switches 8 are connected. The fourth end of the resonant inductor L1 is connected to the sixth end 154 of the regenerative capacitor 15.

The regenerative capacitor 15 is connected between the fourth end of the resonant inductor L1 and the second DC terminal 32. The regenerative capacitor 15 may be, for example, a film capacitor.

The controller 51 controls the plurality of first switching elements 1 and the plurality of second switching elements 2. The controller 51 includes a computer system. The computer system includes a processor and a memory as principal hardware components thereof. The computer system performs the functions of the controller 51 according to the present disclosure by making the processor execute a program stored in the memory of the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

The controller 51 outputs first control signals SU1, SV1, SW1 to control the ON/OFF states of the plurality of first switching elements 1U, 1V, 1W, respectively. Each of the first control signals SU1, SV1, SW1 may be, for example, a pulse width modulation (PWM) signal having, for example, a potential level that alternates between a first potential level (hereinafter sometimes referred to as a "low level") and a second potential level (hereinafter sometimes referred to as a "high level") higher than the first potential level. The first switching elements 1U, 1V, 1W respectively turn ON when the first control signals SU1, SV1, SW1 have high level and respectively turn OFF when the first control signals SU1, SV1, SW1 have low level. In addition, the controller 51 also outputs first control signals SU2, SV2, SW2 to control the ON/OFF states of the plurality of second switching elements 2U, 2V, 2W, respectively. Each of the first control signals SU2, SV2, SW2 may be, for example, a PWM signal having, for example, a potential level that alternates between the first potential level (hereinafter sometimes referred to as a "low level") and the second potential level (hereinafter sometimes referred to as a "high level") higher than the first potential level. The second switching elements 2U, 2V, 2W respectively turn ON when the first control signals SU2, SV2, SW2 have high level and respectively turn OFF when the first control signals SU2, SV2, SW2 have low level.

The controller 51 generates, using a carrier signal having a saw-tooth waveform, the first control signals SU1, SV1, SW1 for the plurality of first switching elements 1U, 1V, 1W, respectively, and the first control signals SU2, SV2, SW2 for the plurality of second switching elements 2U, 2V, 2W, respectively. More specifically, the controller 51 generates, based on at least the carrier signal and a U-phase voltage instruction, the first control signals SU1, SU2 to be applied to the first switching element 1U and the second switching element 2U, respectively. Also, the controller 51 generates, based on at least the carrier signal and a V-phase voltage instruction, the first control signals SV1, SV2 to be applied to the first switching element 1V and the second switching element 2V, respectively. Furthermore, the controller 51 generates, based on at least the carrier signal and a W-phase voltage instruction, the first control signals SW1, SW2 to be applied to the first switching element 1W and the second switching element 2W, respectively. The U-phase voltage instruction, the V-phase voltage instruction, and the W-phase voltage instruction may be, for example, sinusoidal wave signals, of which the phases are different from each other by 120 degrees and of which the value (voltage instruction value) changes with time. Note that the waveform of the carrier signal does not have to be the saw-tooth waveform but may also be a triangular waveform. Also, the U-phase voltage instruction, the V-phase voltage instruction, and the W-phase voltage instruction each have one cycle of the same length. In addition, one cycle of the U-phase voltage instruction, the V-phase voltage instruction, and the W-phase voltage instruction is longer than one cycle of the carrier signal.

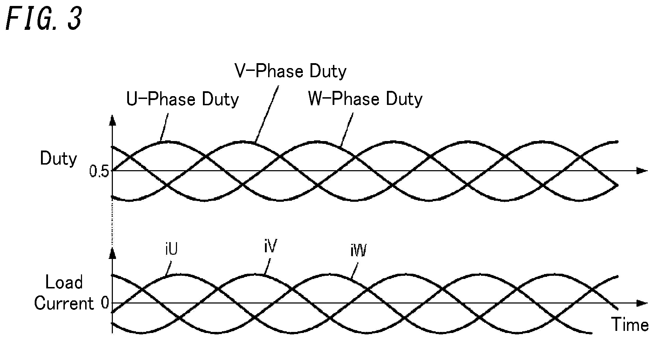

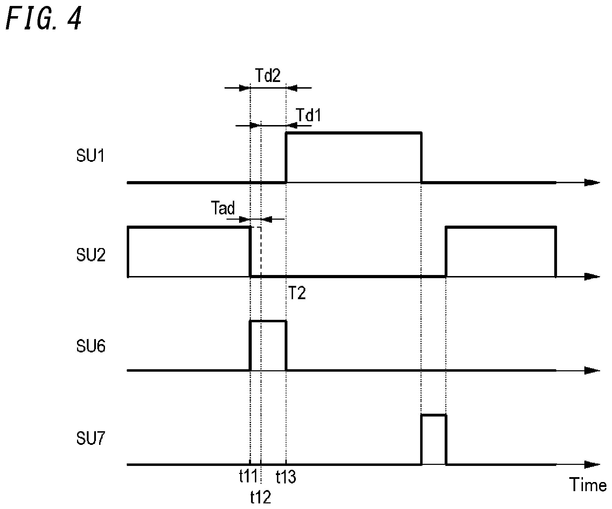

The duty of the first control signals SU1, SU2 to be applied from the controller 51 to the first switching element 1U and the second switching element 2U, respectively, varies in accordance with the U-phase voltage instruction. FIG. 3 shows how duties and load currents, respectively corresponding to three-phase voltage instructions in an AC load connected to the plurality of AC terminals of the power converter 100 according to the first embodiment, change with time. In FIG. 3, the duty of the first control signal SU1 is shown as a "U-phase duty." The controller 51 (refer to FIG. 1) generates the first control signal SU1 to be applied to the first switching element 1U by comparing the U-phase voltage instruction with the carrier signal. The controller 51 generates the first control signal SU2 to be applied to the second switching element 2U by inverting the first control signal SU1 to be applied to the first switching element 1U. In addition, to prevent the respective ON periods of the first switching element 1U and the second switching element 2U from overlapping with each other, the controller 51 sets a first dead time period Td1 (refer to FIG. 4) between a high-level period of the first control signal SU1 and a high-level period of the first control signal SU2.

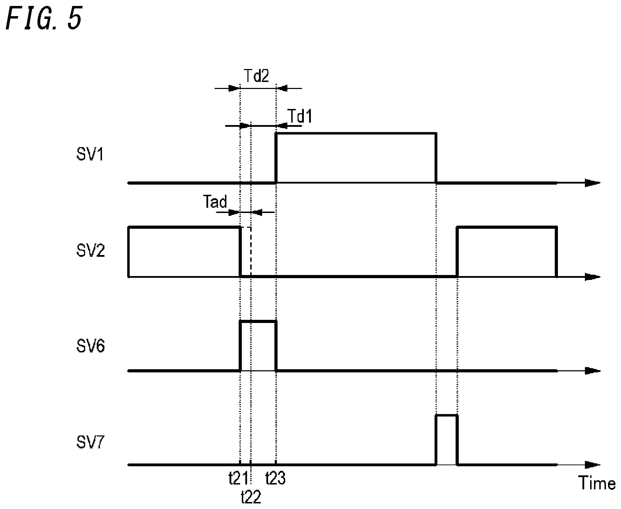

The duty of the first control signals SV1, SV2 to be applied from the controller 51 to the first switching element 1V and the second switching element 2V, respectively, varies in accordance with the V-phase voltage instruction. In FIG. 3, the duty of the first control signal SV1 is shown as a "V-phase duty." The controller 51 (refer to FIG. 1) generates the first control signal SV1 to be applied to the first switching element 1V by comparing the V-phase voltage instruction with the carrier signal. The controller 51 also generates the first control signal SV2 to be applied to the second switching element 2V by inverting the first control signal SV1 to be applied to the first switching element 1V. In addition, to prevent the respective ON periods of the first switching element 1V and the second switching element 2V from overlapping with each other, the controller 51 sets a first dead time period Td1 (refer to FIG. 5) between a high-level period of the first control signal SV1 and a high-level period of the first control signal SV2.

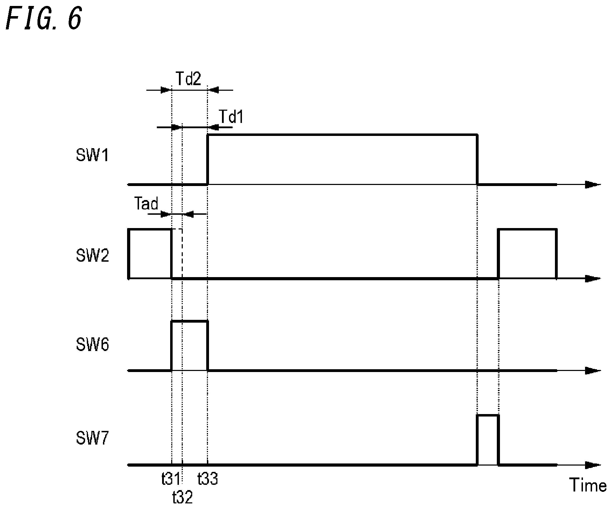

The duty of the first control signals SW1, SW2 to be applied from the controller 51 to the first switching element 1W and the second switching element 2W, respectively, varies in accordance with the W-phase voltage instruction. In FIG. 3, the duty of the first control signal SW1 is shown as a "W-phase duty." The controller 51 (refer to FIG. 1) generates the first control signal SW1 to be applied to the first switching element 1W by comparing the W-phase voltage instruction with the carrier signal. The controller 51 generates the first control signal SW2 to be applied to the second switching element 2W by inverting the first control signal SW1 to be applied to the first switching element 1W. In addition, to prevent the respective ON periods of the first switching element 1W and the second switching element 2W from overlapping with each other, the controller 51 sets a first dead time period Td1 (refer to FIG. 6) between a high-level period of the first control signal SW1 and a high-level period of the first control signal SW2.

The U-phase voltage instruction, the V-phase voltage instruction, and the W-phase voltage instruction may be, for example, sinusoidal wave signals, of which the phases are different from each other by 120 degrees and of which the value changes with time. Thus, the respective duties (i.e., U-, V-, and W-phase duties) of the first control signals SU1, SV1, SW1 change in the form of sinusoidal waves, of which the phases are different from each other by 120 degrees, as shown in FIG. 3, for example. In the same way, the respective duties of the first control signals SU2, SV2, SW2 also change in the form of sinusoidal waves, of which the phases are different from each other by 120 degrees.

The controller 51 generates the respective first control signals SU1, SU2, SV1, SV2, SW1, SW2 based on the carrier signal, the respective voltage instructions, and information about the state of the AC load RA1. For example, if the AC load RA1 is a three-phase motor, the information about the state of the AC load RA1 may include, for example, detection values provided by a plurality of current sensors for respectively detecting output currents (hereinafter sometimes referred to as "load currents") iU, iV, iW flowing respectively through the U-, V-, and W-phases of the AC load RA1.

The plurality of switches 8, the resonant inductor L1, the plurality of resonant capacitors 9, and the regenerative capacitor 15 are provided to make zero-voltage soft switching of the plurality of first switching elements 1 and the plurality of second switching elements 2.

If the third switching element 6U is ON and the fourth switching element 7U is OFF, the switch 8U allows a charging current that flows through the regenerative capacitor 15, the resonant inductor L1, the switch 8U, and the resonant capacitor 9U in this order to pass therethrough. The charging current is a current for charging the resonant capacitor 9U with electricity. On the other hand, if the third switching element 6U is OFF and the fourth switching element 7U is ON, the switch 8U allows a discharging current that flows through the resonant capacitor 9U, the switch 8U, the resonant inductor L1, and the regenerative capacitor 15 in this order to pass therethrough. The discharging current is a current for discharging electricity from the resonant capacitor 9U.

If the third switching element 6V is ON and the fourth switching element 7V is OFF, the switch 8V allows a charging current that flows through the regenerative capacitor 15, the resonant inductor L1, the switch 8V, and the resonant capacitor 9V in this order to pass therethrough. The charging current is a current for charging the resonant capacitor 9V with electricity. On the other hand, if the third switching element 6V is OFF and the fourth switching element 7V is ON, the switch 8V allows a discharging current that flows through the resonant capacitor 9V, the switch 8V, the resonant inductor L1, and the regenerative capacitor 15 in this order to pass therethrough. The discharging current is a current for discharging electricity from the resonant capacitor 9V.

If the third switching element 6W is ON and the fourth switching element 7W is OFF, the switch 8W allows a charging current that flows through the regenerative capacitor 15, the resonant inductor L1, the switch 8W, and the resonant capacitor 9W in this order to pass therethrough. The charging current is a current for charging the resonant capacitor 9W with electricity. On the other hand, if the third switching element 6W is OFF and the fourth switching element 7W is ON, the switch 8W allows a discharging current that flows through the resonant capacitor 9W, the switch 8W, the resonant inductor L1, and the regenerative capacitor 15 in this order to pass therethrough. The discharging current is a current for discharging electricity from the resonant capacitor 9W.

In this embodiment, the controller 51 sets, with respect to each of the plurality of switching circuits 10, the dead time period between a high-level period of the first control signal for the first switching element 1 and a high-level period of the first control signal for the second switching element 2 at a second dead time period Td2. The second dead time period Td2 is determined by a first dead time period Td1 and a predetermined amount of time (additional time Tad). The second dead time period Td2 includes the first dead time period Td1. The second dead time period Td2 has a length calculated by adding the predetermined amount of time to the length of the first dead time period Td1 (i.e., the sum of the length of the first dead time period Td1 and the length of the predetermined amount of time). Speaking from a different perspective, the controller 51 defines the second dead time period Td2, calculated by extending the first dead time period Td1 by the predetermined amount of time, to be the dead time period.

The first dead time period Td1 is a period which has been set between the high-level period of the first control signal for the first switching element 1 and the high-level period of the first control signal for the second switching element 2 with respect to each of the plurality of switching circuits 10. The first dead time period Td1 is a period in which the first control signal for the first switching element 1 and the first control signal for the second switching element 2 are both set at the low level to prevent respective ON periods of the first switching element 1 and the second switching element 2 from overlapping with each other (i.e., to prevent a period in which the first switching element 1 and the second switching element 2 are both in ON state from being generated). In this embodiment, the length of a resonant half cycle corresponding to each of the plurality of switches is designed according to, for example, the respective lengths of the first dead time periods Td1 for the plurality of switching circuits 10. The resonant half cycle is one half of a resonant cycle, which is the reciprocal of the resonant frequency of a resonant circuit including the switch 8, the resonant inductor L1, and one resonant capacitor 9. Thus, if the inductance of the resonant inductor L1 is L and the capacitance of the resonant capacitor 9 is C, then the resonant half cycle is π × (L▪C)^{1/2}. The length of the resonant half cycle is set to be equal to the length of the first dead time period Td1, for example.

The length of the resonant half cycle of a resonant circuit including the resonant inductor L1 and the resonant capacitor 9U may be set at, for example, the length of the first dead time period Td1 (refer to FIG. 4) provided between the high-level period of the first control signal SU1 and the high-level period of the first control signal SU2. The length of the resonant half cycle of a resonant circuit including the resonant inductor L1 and the resonant capacitor 9V may be set at, for example, the length of the first dead time period Td1 (refer to FIG. 5) provided between the high-level period of the first control signal SV1 and the high-level period of the first control signal SV2. The length of the resonant half cycle of a resonant circuit including the resonant inductor L1 and the resonant capacitor 9W may be set at, for example, the length of the first dead time period Td1 (refer to FIG. 6) provided between the high-level period of the first control signal SW1 and the high-level period of the first control signal SW2.

Supposing the resonant cycle is Tres, the resonant half cycle Tres/2 is as long as the first dead time period Td1. The end time of the resonant half cycle preferably agrees with the end time of the first dead time period Td1 for the switching circuit 10 corresponding to the switch 8. FIG. 4 is a timing chart illustrating how the power converter 100 according to the first embodiment operates. In FIG. 4, shown as an example are the first control signals SU1, SU2, the second control signals SU6, SU7, the first dead time period Td1, the additional time Tad, and the second dead time period Td2. In the example illustrated in FIG. 4, the beginning time and end time of the first dead time period Td1 are a time t12 and a time t13, respectively. FIG. 5 is a timing chart illustrating how the power converter 100 according to the first embodiment operates. In FIG. 5, shown as an example are the first control signals SV1, SV2, the second control signals SV6, SV7, the first dead time period Td1, the additional time Tad, and the second dead time period Td2. In the example illustrated in FIG. 5, the beginning time and end time of the first dead time period Td1 are a time t22 and a time t23, respectively. FIG. 6 is a timing chart illustrating how the power converter 100 according to the first embodiment operates. In FIG. 6, shown as an example are the first control signals SW1, SW2, the second control signals SW6, SW7, the first dead time period Td1, the additional time Tad, and the second dead time period Td2. In the example illustrated in FIG. 6, the beginning time and end time of the first dead time period Td1 are a time t32 and a time t33, respectively.

The length of the resonant half cycle described above is an exemplary value according to an ideal design. Alternatively, the length of the resonant half cycle may also be equal to or greater than 90% and equal to or less than 110% of the length of the first dead time period Td1. The resonant half cycle and the first dead time period Td1 may have mutually different lengths.

The second dead time period Td2 is a period defined by adding a predetermined amount of time corresponding to the current value of the load current and the voltage value of the regenerative capacitor 15 to the first dead time period Td1. The predetermined amount of time may be, for example, an additional time Tad determined by the current value of the load current, the voltage value of the regenerative capacitor 15, and the inductance L of the resonant inductor L1. The current value of the load current may be, for example, either the result of detection of the load current by the current sensor or a signal processing value thereof or an estimated value of the load current iU. In this case, as the detection result of the load current or the signal processing value thereof, either a detection value at a carrier cycle at which the additional time Tad is added to the first dead time period Td1 or a detection value at a timing closest to the carrier cycle may be used. Also, in this case, as the estimated value of the load current, a value of the load current estimated at the carrier cycle at which the additional time Tad is added to the first dead time period Td1 may be used, for example. As the inductance L of the resonant inductor L1, the value stored in advance by the controller 51 is used. The voltage value of the regenerative capacitor 15 is the detection value of the voltage V15 across the regenerative capacitor 15 (i.e., the potential V15 at the sixth end 154 of the regenerative capacitor 15). In the example illustrated in FIG. 4, the additional time Tad is a value calculated by the equation: Tad = iU × (L/V15). In the example illustrated in FIG. 5, the additional time Tad is a value calculated by the equation: Tad = iV × (L/V15). In the example illustrated in FIG. 6, the additional time Tad is a value calculated by the equation: Tad = iW × (L/V15).

The length of the predetermined amount of time is an exemplary value according to an ideal design. Alternatively, the length of the predetermined amount of time may also be equal to or greater than 90% and equal to or less than 110% of the additional time Tad.

In this power converter 100, the signal generator circuit 52 provided separately from the controller 51 controls the plurality of switches 8.

The signal generator circuit 52 generates second control signals SU6, SU7, SV6, SV7, SW6, SW7 for use to control the ON/OFF states of the third switching element 6U, the fourth switching element 7U, the third switching element 6V, the fourth switching element 7V, the third switching element 6W, and the fourth switching element 7W and outputs the second control signals SU6, SU7, SV6, SV7, SW6, SW7 to the respective gate terminals of the third switching element 6U, the fourth switching element 7U, the third switching element 6V, the fourth switching element 7V, the third switching element 6W, and the fourth switching element 7W.

The signal generator circuit 52 generates, with respect to each of the plurality of switches 8, the second control signal having a high-level period adapted to the second dead time period Td2 for a corresponding one of the plurality of switching circuits 10. In the first embodiment, the signal generator circuit 52 synchronizes the beginning time of the high-level period of the second control signal with respect to each of the plurality of switches 8 with the beginning time of the second dead time period Td2 and synchronizes the end time of the high-level period of the second control signal with respect to each of the plurality of switches 8 with the end time of the second dead time period Td2. Therefore, in the first embodiment, the length of the high-level period of the second control signal with respect to each of the plurality of switches 8 is equal to the length of the second dead time period Td2.

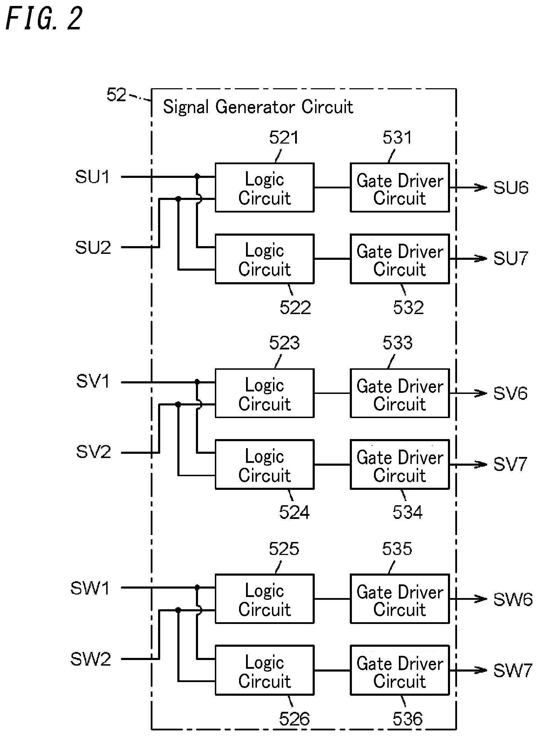

The signal generator circuit 52 generates the second control signal for each of the plurality of switches 8 using at least one of the first control signal for the first switching element 1 of a corresponding one of the plurality of switching circuits 10 or the first control signal for the second switching element 2 of the corresponding one of the plurality of switching circuits 10. FIG. 2 is a circuit block diagram of the signal generator circuit 52 included in the power converter 100 according to the first embodiment. In this embodiment, the signal generator circuit 52 includes a plurality of logic circuits 521-526 and a plurality of gate driver circuits 531-536 as shown in FIG. 2. In the signal generator circuit 52, the plurality of logic circuits 521-526 are provided one to one for the plurality of gate driver circuits 536.

The logic circuit 521 is configured to generate a second control signal SU6 using the first control signal SU1 and the first control signal SU2. The logic circuit 521 is a logic circuit with two inputs and one output, for example. The logic circuit 521 receives the first control signal SU1 and the first control signal SU2 supplied from the controller 51 and outputs the second control signal SU6. The second control signal SU6 is passed to the third switching element 6U via the gate driver circuit 531.

The logic circuit 522 is configured to generate a second control signal SU7 using the first control signal SU1 and the first control signal SU2. The logic circuit 522 is a logic circuit with two inputs and one output, for example. The logic circuit 522 receives the first control signal SU1 and the first control signal SU2 supplied from the controller 51 and outputs the second control signal SU7. The second control signal SU7 is passed to the fourth switching element 7U via the gate driver circuit 532.

The logic circuit 523 is configured to generate a second control signal SV6 using the first control signal SV1 and the first control signal SV2. The logic circuit 523 is a logic circuit with two inputs and one output, for example. The logic circuit 523 receives the first control signal SV1 and the first control signal SV2 supplied from the controller 51 and outputs the second control signal SV6. The second control signal SV6 is passed to the third switching element 6V via the gate driver circuit 533.

The logic circuit 524 is configured to generate a second control signal SV7 using the first control signal SV1 and the first control signal SV2. The logic circuit 524 is a logic circuit with two inputs and one output, for example. The logic circuit 524 receives the first control signal SV1 and the first control signal SV2 supplied from the controller 51 and outputs the second control signal SV7. The second control signal SV7 is passed to the fourth switching element 7V via the gate driver circuit 534.

The logic circuit 525 is configured to generate a second control signal SW6 using the first control signal SW1 and the first control signal SW2. The logic circuit 525 is a logic circuit with two inputs and one output, for example. The logic circuit 525 receives the first control signal SW1 and the first control signal SW2 supplied from the controller 51 and outputs the second control signal SW6. The second control signal SW6 is passed to the third switching element 6W via the gate driver circuit 535.

The logic circuit 526 is configured to generate a second control signal SW7 using the first control signal SW1 and the first control signal SW2. The logic circuit 526 is a logic circuit with two inputs and one output, for example. The logic circuit 526 receives the first control signal SW1 and the first control signal SW2 supplied from the controller 51 and outputs the second control signal SW7. The second control signal SW7 is passed to the fourth switching element 7W via the gate driver circuit 536.

The first clamping diode 13 has an anode connected to the third end of the resonant inductor L1 and a cathode connected to the first DC terminal 31. The second clamping diode 14 has a cathode connected to the third end of the resonant inductor L1 and an anode connected to the second DC terminal 32.

### (3) Operation of power converter

In the following description, as for a current iL1 flowing through the resonant inductor L1, if the current flows in the direction indicated by the arrow shown in FIG. 1, then the polarity of the current iL1 is supposed to be positive. On the other hand, if the current iL1 flows in the direction opposite from the one indicated by the arrow shown in FIG. 1, then the polarity of the current iL1 is supposed to be negative. In addition, in the following description, as for each of the load currents iU, iV, iW respectively flowing through the U-, V-, and W-phases of the AC load RA1, if the load current iU, iV, iW flows in the direction indicated by a corresponding one of the arrows shown in FIG. 1, then the polarity of the load current iU, iV, iW is supposed to be positive. On the other hand, if the load current iU, iV, iW flows in the direction opposite from the one indicated by the arrow shown in FIG. 1, then the polarity of the load current iU, iV, iW is supposed to be negative. Furthermore, as for each of currents i9U, i9V, i9W flowing through the resonant capacitors 9U, 9V, 9W, respectively, if the current i9U, i9V, i9W flows in the direction indicated by a corresponding one of the arrows shown in FIG. 1, then the polarity of the current i9U, i9V, i9W is supposed to be positive. On the other hand, if the current i9U, i9V, i9W flows in the direction opposite from the one indicated by the arrow shown in FIG. 1, then the polarity of the current i9U, i9V, i9W is supposed to be negative. Thus, in the case of the discharging operation of discharging electricity from the resonant capacitor 9U, 9V, 9W, the polarity of the current i9U, i9V, i9W is positive. On the other hand, in the case of the charging operation of charging the resonant capacitor 9U, 9V, 9W with electricity, the polarity of the current i9U, i9V, i9W is negative.

In the following description, the switching element (which is either the first switching element 1 or the second switching element 2) as the target of the zero-voltage soft switching will be hereinafter sometimes referred to as a "target switching element."

In the power converter 100, if the target switching element is a first switching element 1 (hereinafter sometimes referred to as a "target first switching element 1") and the polarity of the load current flowing through the AC terminal 41 connected to the target first switching element 1 is positive, then the signal generator circuit 52 turns ON the third switching element 6 corresponding to the target first switching element 1. In this manner, the power converter 100 causes the resonant inductor L1 and resonant capacitor 9 that are connected to the target first switching element 1 to produce resonance, thereby charging the resonant capacitor 9 with electric charges supplied from the regenerative capacitor 15 and reducing the voltage across the target first switching element 1 to zero. This allows the power converter 100 to make zero-voltage soft switching of the target first switching element 1.

On the other hand, in the power converter 100, if the target switching element is a second switching element 2 (hereinafter sometimes referred to as a "target second switching element 2") and the polarity of the load current flowing through the AC terminal 41 connected to the target second switching element 2 is negative, then the signal generator circuit 52 turns ON the fourth switching element 7 corresponding to the target second switching element 2. In this manner, the power converter 100 causes the resonant capacitor 9 and the resonant inductor L1 that are connected to the target second switching element 2 to produce resonance, thereby discharging electricity from the resonant capacitor 9 and reducing the voltage across the target second switching element 2 to zero. This allows the power converter 100 to make zero-voltage soft switching of the target second switching element 2.

When setting the second dead time period Td2 with respect to each of the plurality of switching circuits 10, the controller 51 adds, if the polarity of the load current is positive, the predetermined amount of time (additional time Tad) to the first dead time period Td1 by shortening the high-level period of the first control signal for the second switching element 2.

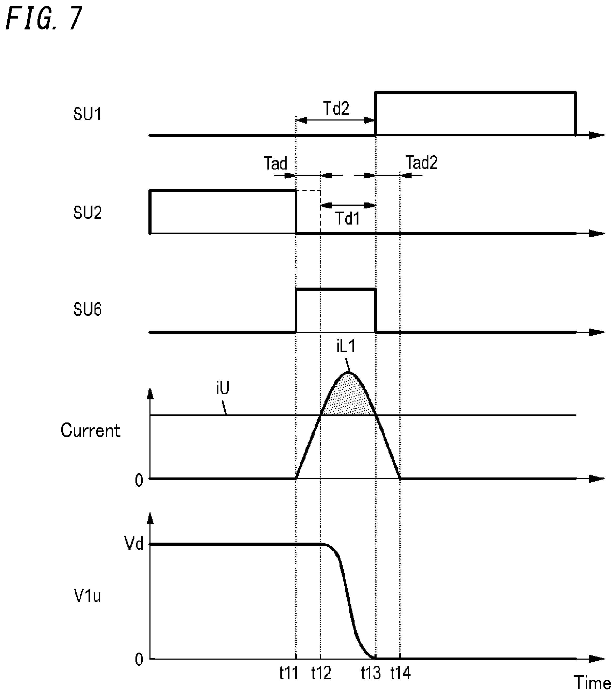

FIG. 7 illustrates how the power converter 100 according to the first embodiment operates in a situation where the polarity of a U-phase load current is positive. For example, when setting the second dead time period Td2 with respect to the switching circuit 10U, the controller 51 adds, if the polarity of the load current iU is positive, the predetermined amount of time (additional time Tad) to the first dead time period Td1 by shortening the high-level period of the first control signal SU2 for the second switching element 2U by the predetermined amount of time (additional time Tad) as shown in FIG. 7.

In FIG. 7, shown are the first control signals SU1, SU2, the second control signal SU6, the current iL1 flowing through the resonant inductor L1, and the voltage V1u across the first switching element 1U as for a situation where the target switching element is the first switching element 1U of the switching circuit 10U. In addition, in FIG. 7, also shown as Vd is the voltage value of the DC power supply E1.

If the target switching element is the first switching element 1U, in the switching circuit 10U, the voltage V2u across the second switching element 2U becomes Vd at the end time t13 of the second dead time period Td2 just before the high-level period of the first control signal SU1, and the voltage V1u across the first switching element 1U goes zero at the end time t13 of the second dead time period Td2 just before the high-level period of the first control signal SU1. Therefore, when the first control signal SU1 changes from low level to high level at the time t13, the first switching element 1U is subjected to zero-voltage soft switching. In the example illustrated in FIG. 7, the current iL1 starts flowing through the resonant inductor L1 at the beginning time t11 of the high-level period of the second control signal SU6, comes to have the same value as the load current iU at a time t12 when the predetermined amount of time (additional time Tad) has passed since the time t11, comes to have the same value as the load current iU at the end time t13 of the second dead time period Td2, and goes zero at a time t14 when the second predetermined amount of time Tad2 as long as the predetermined amount of time (first predetermined amount of time) has passed since the time t13. In the signal generator circuit 52, at the time t11 when the first control signal SU2 changes from high level to low level, the second control signal SU6 changes from low level to high level. The current iL1 flowing from the time t12 through the time t13 is a resonant current (i.e., a charging current for the resonant capacitor 9U) flowing from the regenerative capacitor 15 into the resonant capacitor 9U via the resonant inductor L1.

In the following description, a period in which the absolute value of the current iL1 increases from zero to the absolute value of the load current (e.g., the load current iU in the example illustrated in FIG. 7) will be hereinafter referred to as a "first period," a period in which the absolute value of the current iL1 is greater than the load current (e.g., the load current iU in the example illustrated in FIG. 7) will be hereinafter referred to as a "second period," and a period in which the absolute value of the current iL1 decreases from the absolute value of the load current (e.g., the load current iU in the example illustrated in FIG. 7) to zero will be hereinafter referred to as a "third period." In the power converter 100, when iL1 = iU is satisfied due to an increase in the current iL1 from zero in the first period, a transition is made from the first period to the second period. In the second period, the resonant current flows. When the first control signal for the target switching element changes from low level to high level, a transition is made from the second period to the third period.

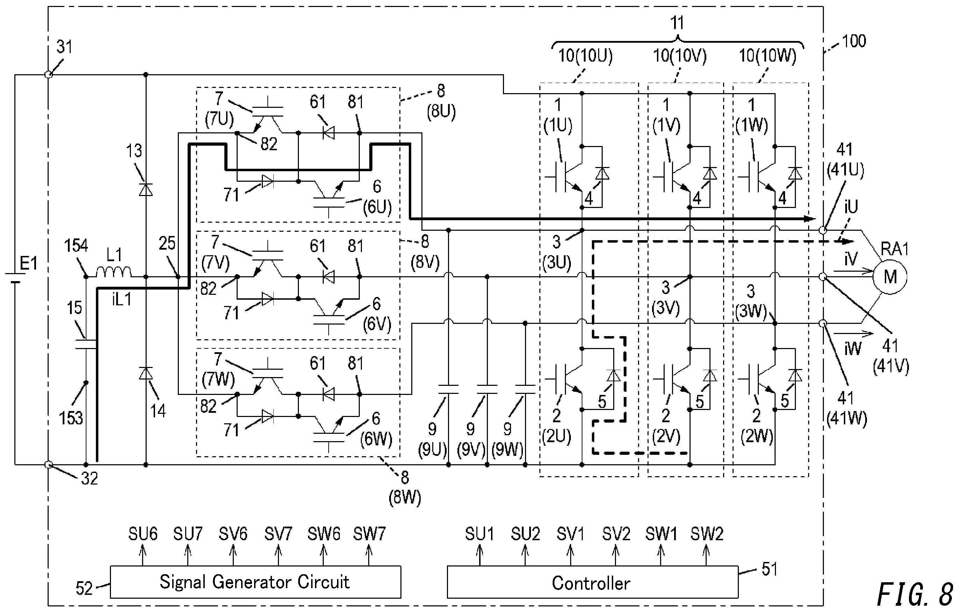

In FIG. 7, the first period is a period from a time t11 through a time t12. The first period is as long as the first predetermined amount of time (additional time Tad). FIG. 8 illustrates how the power converter 100 according to the first embodiment operates in the first period. In FIG. 8, the current path of the current iL1 flowing through the resonant inductor L1 in the first period shown in FIG. 7 is indicated by the bold solid arrow and the current path of the load current iU flowing in the first period is indicated by the bold dashed arrow. In the first period, each of the first switching element 1U, the second switching element 2U, and the fourth switching element 7U is in OFF state, and the third switching element 6U is in ON state. In the first period, the current iL1 flows along the path that passes through the regenerative capacitor 15, the resonant inductor L1, the diode 71, the third switching element 6U, and the AC terminal 41U in this order. In addition, in the first period, the load current iU flows along the path that passes through the second diode 5 connected to the second switching element 2U in antiparallel, the AC terminal 41U, and the AC load RA1 in this order.

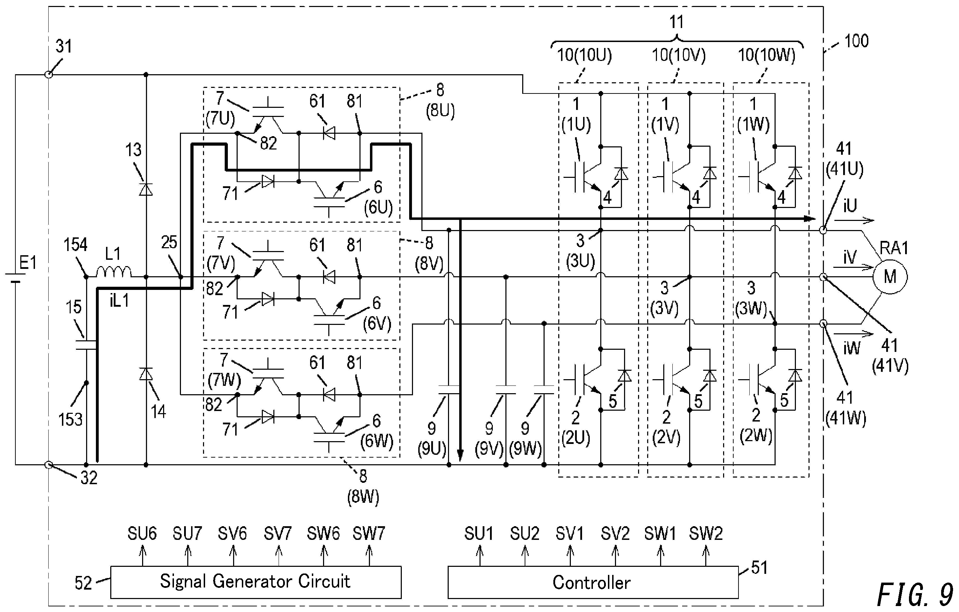

In FIG. 7, the second period is a period from the time t12 through a time t13. The second period is as long as the resonant half cycle. FIG. 9 illustrates how the power converter 100 according to the first embodiment operates in the second period. In FIG. 9, the current path of the current iL1 flowing through the resonant inductor L1 in the second period shown in FIG. 7 is indicated by the bold solid arrow. In the second period, each of the first switching element 1U, the second switching element 2U, and the fourth switching element 7U is in OFF state, and the third switching element 6U is in ON state. In the second period, the current iL1 flows along the path that passes through the regenerative capacitor 15, the resonant inductor L1, the diode 71, and the third switching element 6U in this order and branches into a current flowing toward the AC terminal 41U and a current (resonant current) flowing toward the resonant capacitor 9U. In the second period, the resonant capacitor 9U is charged with the current flowing through the resonant capacitor 9.

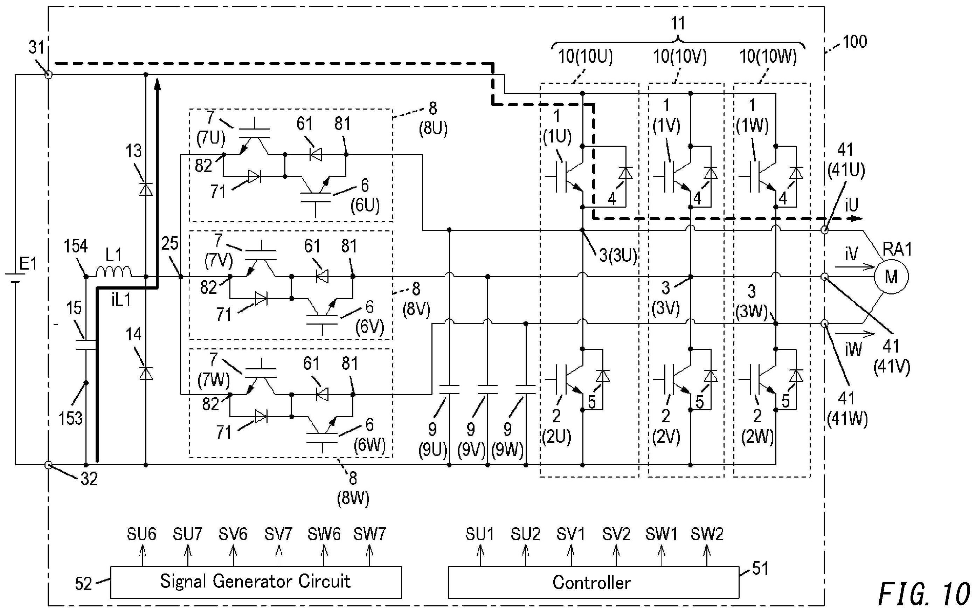

In FIG. 7, the third period is a period from the time t13 through a time t14. The third period is as long as the second predetermined amount of time Tad2. FIG. 10 illustrates how the power converter 100 according to the first embodiment operates in the third period. In FIG. 10, the current path of the current iL1 flowing through the resonant inductor L1 in the third period shown in FIG. 7 is indicated by the bold solid arrow and the current path of the load current iU flowing in the third period is indicated by the bold dashed arrow. In the third period, the first switching element 1U is in ON state, and each of the second switching element 2U, the third switching element 6U, and the fourth switching element 7U is in OFF state. In the third period, the current iL1 flows along the path that passes through the regenerative capacitor 15, the resonant inductor L1, and the first clamping diode 13 in this order. As a result, the current iL1 is reduced to zero. In addition, in the third period, the load current iU flows along the path that passes through the first DC terminal 31, the first switching element 1U, the AC terminal 41U, and the AC load RA1 in this order.

When setting the second dead time period Td2 with respect to each of the plurality of switching circuits 10, the controller 51 adds, if the polarity of the load current is positive, the predetermined amount of time to the first dead time period Td1 by shortening the high-level period of the first control signal for the first switching element 1.

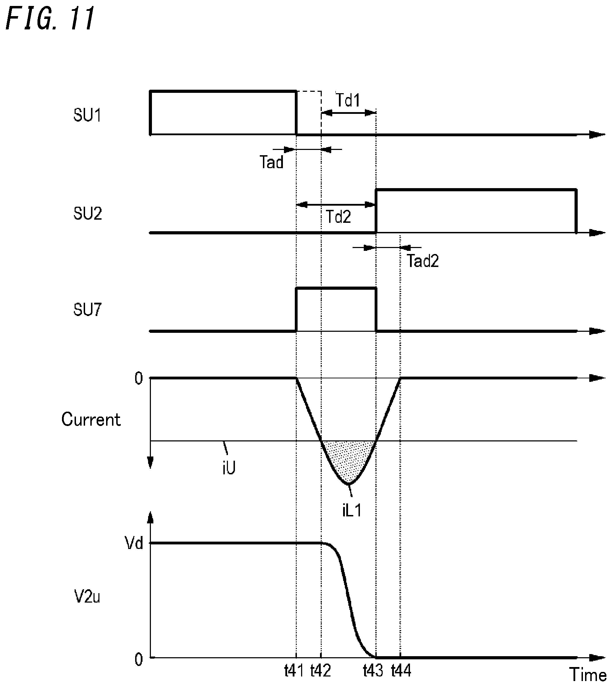

FIG. 11 illustrates how the power converter 100 according to the first embodiment operates in a situation where the polarity of the U-phase load current is negative. For example, when setting the second dead time period Td2 with respect to the switching circuit 10U, the controller 51 adds, if the polarity of the load current iU is negative, the predetermined amount of time (additional time Tad) to the first dead time period Td1 by shortening the high-level period of the first control signal SU1 for the first switching element 1U by the predetermined amount of time (additional time Tad) as shown in FIG. 11.

In FIG. 11, shown are the first control signals SU1, SU2, the second control signal SU7, the current iL1 flowing through the resonant inductor L1, and the voltage V2u across the second switching element 2U as for a situation where the target switching element is the second switching element 2U of the switching circuit 10U. In addition, in FIG. 11, also shown as Vd is the voltage value of the DC power supply E1.

If the target switching element is the second switching element 2U, in the switching circuit 10U, the voltage V1u across the first switching element 1U becomes Vd at the end time t43 of the second dead time period Td2 just before the high-level period of the first control signal SU2, and the voltage V2u across the second switching element 2U goes zero at the end time t43 of the second dead time period Td2. Therefore, when the first control signal SU2 changes from low level to high level at the time t43, the second switching element 2U is subjected to zero-voltage soft switching. In the example illustrated in FIG. 11, the current iL1 starts flowing through the resonant inductor L1 at the beginning time t41 of the high-level period of the second control signal SU7, comes to have the same value as the load current iU at a time t42 when the additional time Tad has passed since the time t41, comes to have the same value as the load current iU at the end time t43 of the second dead time period Td2, and goes zero at a time t44 when the second predetermined amount of time Tad2 as long as the first predetermined amount of time (that is predetermined amount of time) has passed since the time t43. In the signal generator circuit 52, at the time when the first control signal SU1 changes from high level to low level, the second control signal SU7 changes from low level to high level. The current iL1 flowing from the time t42 through the time t43 is a resonant current (i.e., a discharging current for the resonant capacitor 9U) flowing from the resonant capacitor 9U into the resonant inductor L1.

In FIG. 11, the first period is a period from the time t41 through the time t42. In the first period, each of the first switching element 1U, the second switching element 2U, and the third switching element 6U is in OFF state, and the fourth switching element 7U is in ON state. In the first period, the current iL1 flows along the path that passes through the AC terminal 41U, the diode 61, the fourth switching element 7U, the resonant inductor L1, and the regenerative capacitor 15 in this order. In addition, in the first period, the load current iU flows along the path that passes, in this order, through the AC load RA1, the AC terminal 41U, and the first diode 4 connected to the first switching element 1U in antiparallel.

In FIG. 11, the second period is a period from the time t42 through the time t43. In the second period, each of the first switching element 1U, the second switching element 2U, and the third switching element 6U is in OFF state, and the fourth switching element 7U is in ON state. In the second period, the current iL1 flowing through the resonant inductor L1 is a confluent current of a current flowing along the path that passes through the AC terminal 41U, the diode 61, the fourth switching element 7U, the resonant inductor L1, and the regenerative capacitor 15 in this order and a current (resonant current) flowing along the path that passes through the resonant capacitor 9U, the diode 61, the fourth switching element 7U, the resonant inductor L1, and the regenerative capacitor 15 in this order. In the second period, electricity is discharged from the resonant capacitor 9.

In FIG. 11, the third period is a period from the time t43 through the time t44. In the third period, the second switching element 2U is in ON state, and each of the first switching element 1U, the third switching element 6U, and the fourth switching element 7U is in OFF state. In the third period, the current iL1 flows along the path that passes through the second clamping diode 14, the resonant inductor L1, and the regenerative capacitor 15 in this order. As a result, the absolute value of the current iL1 is reduced to zero. In addition, in the third period, the load current iU flows along the path that passes through the AC load RA1, the AC terminal 41U, the second switching element 2U, and the second DC terminal 32 in this order.

In the example described above, the second dead time period Td2 is set with respect to the switching circuit 10U. The same statement applies to the switching circuit 10V and the switching circuit 10W as well.

### (4) Advantages

A power converter 100 according to the first embodiment includes a first DC terminal 31 and a second DC terminal 32, a power converter circuit 11, a plurality of AC terminals 41, a plurality of switches 8, a plurality of resonant capacitors 9, a resonant inductor L1, a regenerative capacitor 15, a controller 51, and a signal generator circuit 52. The power converter circuit 11 includes a plurality of first switching elements 1 and a plurality of second switching elements 2. In the power converter circuit 11, a plurality of switching circuits 10, in each of which one of the plurality of first switching elements 1 and a corresponding one of the plurality of second switching elements 2 are connected one to one in series, are connected to each other in parallel. The controller 51 sets, with respect to each of the plurality of switching circuits 10, a second dead time period Td2 between the high-level period of a first control signal for the first switching element 1 and the high-level period of a first control signal for the second switching element 2. The second dead time period Td2 is defined by adding a predetermined amount of time (additional time Tad) to a first dead time period Td1. The first dead time period Td1 has been set in advance to prevent respective ON periods of the first switching element 1 and the second switching element 2 from overlapping with each other. The predetermined amount of time is determined based on the current value of a load current, inductance of the resonant inductor L1, and a voltage value of the regenerative capacitor 15. The signal generator circuit 52 generates, with respect to each of the plurality of switches 8, a second control signal having a high-level period adapted to the second dead time period Td2 for a corresponding one of the plurality of switching circuits 10.

This configuration allows for realizing zero-voltage soft switching without having the controller 51 directly control a plurality of switches 8 provided for the purpose of making zero-voltage soft switching. More specifically, there is no need for the controller 51 to generate a second control signal for directly controlling the plurality of switches 8 provided for the purpose of making zero-voltage soft switching. This allows for performing zero-voltage soft switching on each of the plurality of first switching elements 1 and the plurality of second switching elements 2 even without having the controller 51 directly control the plurality of switches 8. Furthermore, according to this configuration, there is no need for the controller 51 to generate and output the plurality of second control signals SU6, SU7, SV6, SV7, SW6, SW7, thus contributing to simplifying the configuration of the controller 51. For example, this may reduce an increase in the number of control ports of a microcomputer included in the controller 51 and thereby reduce an increase in the overall size of the controller 51.

In addition, a power converter 100 according to the first embodiment further includes a first clamping diode 13 and a second clamping diode 14. The first clamping diode 13 has an anode connected to a third end of the resonant inductor L1 and a cathode connected to the first DC terminal 31. The second clamping diode 14 has a cathode connected to the third end of the resonant inductor L1 and an anode connected to the second DC terminal 32. When setting the second deadtime period Td2 with respect to each of the plurality of switching circuits 10, the controller 51 adds, if the polarity of the load current is positive, the predetermined amount of time (additional time Tad) to the first deadtime period Td1 by shortening the high-level period of the first control signal for the second switching element 2. In addition, when setting the second deadtime period Td2 with respect to each of the plurality of switching circuits 10, the controller 51 also adds, if the polarity of the load current is negative, the predetermined amount of time (additional time Tad) to the first deadtime period Td1 by shortening the high-level period of the first control signal for the first switching element 1.

This configuration allows for realizing zero-voltage soft switching while further reducing dead time loss and a dead time error.

Also, in a power converter 100 according to the first embodiment, the signal generator circuit 52 generates a second control signal for each of the plurality of switches 8 using both the first control signal for the first switching element 1 of a corresponding one of the plurality of switching circuits 10 and the first control signal for the second switching element 2 of the corresponding one of the plurality of switching circuits 10.

This configuration allows for easily generating a second control signal, of which the high-level period is adapted to the second dead time period Td2, thus contributing to simplifying the configuration of the signal generator circuit 52.

### (Second embodiment)

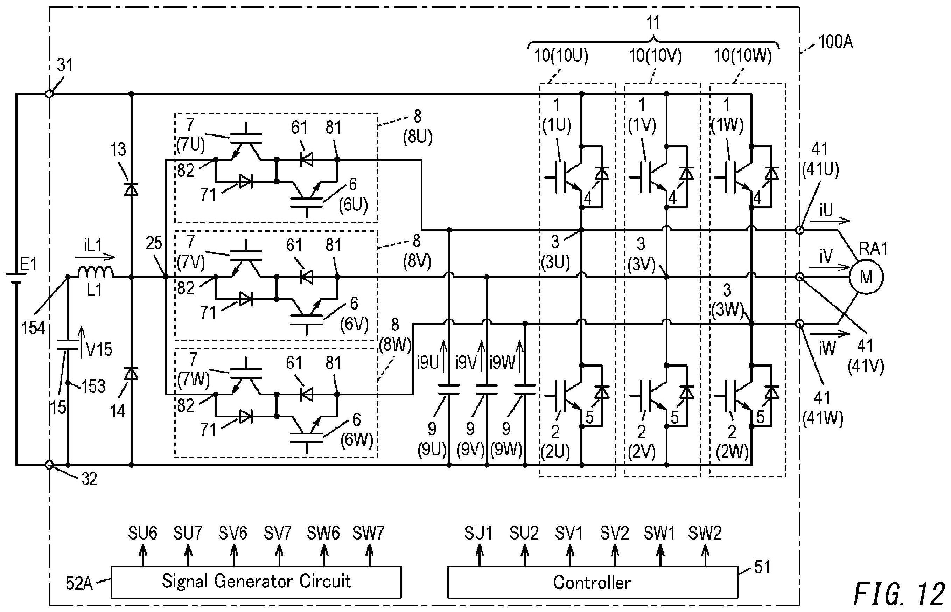

A power converter 100A according to a second embodiment will be described with reference to FIGS. 12-15. In the following description, any constituent element of the power converter 100A according to this second embodiment, having the same function as a counterpart of the power converter 100 (refer to FIGS. 1 and 2) according to the first embodiment described above, will be designated by the same reference numeral as that counterpart's, and description thereof will be omitted herein.

### (1) Configuration

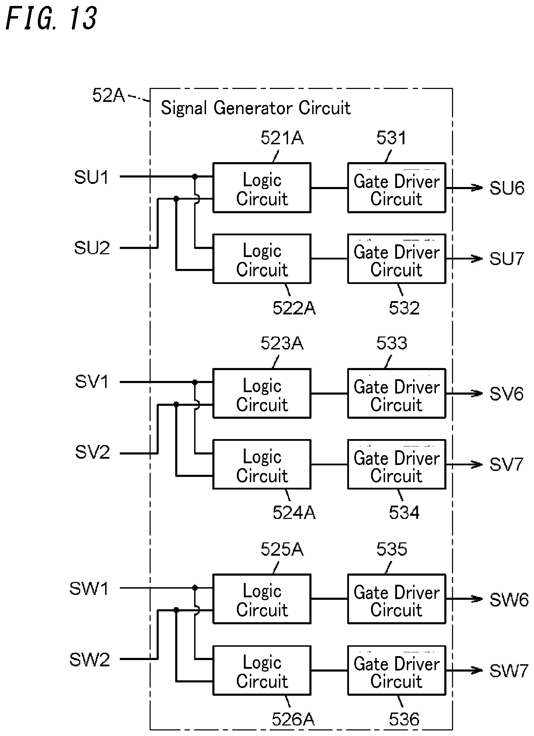

FIG. 12 is a circuit diagram of a system including a power converter 100A according to the second embodiment. FIG. 13 is a circuit block diagram of a signal generator circuit 52A included in the power converter 100A according to the second embodiment. As shown in FIGS. 12 and 13, the power converter 100A includes the signal generator circuit 52A instead of the signal generator circuit 52 of the power converter 100, which is a difference from the power converter 100.

In this power converter 100A, the signal generator circuit 52A controls the plurality of switches 8.

The signal generator circuit 52A generates second control signals SU6, SU7, SV6, SV7, SW6, SW7 for use to control the ON/OFF states of the third switching element 6U, the fourth switching element 7U, the third switching element 6V, the fourth switching element 7V, the third switching element 6W, and the fourth switching element 7W and outputs the second control signals SU6, SU7, SV6, SV7, SW6, SW7 to the respective gate terminals of the third switching element 6U, the fourth switching element 7U, the third switching element 6V, the fourth switching element 7V, the third switching element 6W, and the fourth switching element 7W.

The signal generator circuit 52A generates, with respect to each of the plurality of switches 8, the second control signal having a high-level period adapted to the second dead time period Td2 for a corresponding one of the plurality of switching circuits 10. In the second embodiment, the signal generator circuit 52A synchronizes the beginning time of the high-level period of the second control signal for each of the plurality of switches 8 with the beginning time of the second dead time period Td2 and postpones the end time of the high-level period of the second control signal for each of the plurality of switches 8 by at least the third period from the end time of the second dead time period Td2. Therefore, according to the second embodiment, the high-level period of the second control signal for each of the plurality of switches 8 is longer than the second dead time period Td2.

The signal generator circuit 52A generates, with respect to each of the plurality of switches 8, the second control signal using both the first control signal for the first switching element 1 of a corresponding one of the plurality of switching circuits 10 and the first control signal for the second switching element 2 of the corresponding one of the plurality of switching circuits 10. In this embodiment, the signal generator circuit 52A includes a plurality of logic circuits 521A-526A and a plurality of gate driver circuits 531-536 as shown in FIG. 13. In the signal generator circuit 52A, the plurality of logic circuits 521A-526A are provided one to one for the plurality of gate driver circuits 531-536, respectively.

The logic circuit 521A is configured to generate a second control signal SU6 using the first control signal SU1 and the first control signal SU2. The logic circuit 521A is a logic circuit with two inputs and one output, for example. The logic circuit 521A receives the first control signal SU1 and the first control signal SU2 supplied from the controller 51 and outputs the second control signal SU6. The second control signal SU6 is passed to the third switching element 6U via the gate driver circuit 531.

The logic circuit 522A is configured to generate a second control signal SU7 using the first control signal SU1 and the first control signal SU2. The logic circuit 522A is a logic circuit with two inputs and one output, for example. The logic circuit 522A receives the first control signal SU1 and the first control signal SU2 supplied from the controller 51 and outputs the second control signal SU7. The second control signal SU7 is passed to the fourth switching element 7U via the gate driver circuit 532.

The logic circuit 523A is configured to generate a second control signal SV6 using the first control signal SV1 and the first control signal SV2. The logic circuit 523A is a logic circuit with two inputs and one output, for example. The logic circuit 523A receives the first control signal SV1 and the first control signal SV2 supplied from the controller 51 and outputs the second control signal SV6. The second control signal SV6 is passed to the third switching element 6V via the gate driver circuit 533.

The logic circuit 524A is configured to generate a second control signal SV7 using the first control signal SV1 and the first control signal SV2. The logic circuit 524A is a logic circuit with two inputs and one output, for example. The logic circuit 524A receives the first control signal SV1 and the first control signal SV2 supplied from the controller 51 and outputs the second control signal SV7. The second control signal SV7 is passed to the fourth switching element 7V via the gate driver circuit 534.

The logic circuit 525A is configured to generate a second control signal SW6 using the first control signal SW1 and the first control signal SW2. The logic circuit 525A is a logic circuit with two inputs and one output, for example. The logic circuit 525A receives the first control signal SW1 and the first control signal SW2 supplied from the controller 51 and outputs the second control signal SW6. The second control signal SW6 is passed to the third switching element 6W via the gate driver circuit 535.

The logic circuit 526A is configured to generate a second control signal SW7 using the first control signal SW1 and the first control signal SW2. The logic circuit 526A is a logic circuit with two inputs and one output, for example. The logic circuit 526A receives the first control signal SW1 and the first control signal SW2 supplied from the controller 51 and outputs the second control signal SW7. The second control signal SW7 is passed to the fourth switching element 7W via the gate driver circuit 536.

### (2) Operation

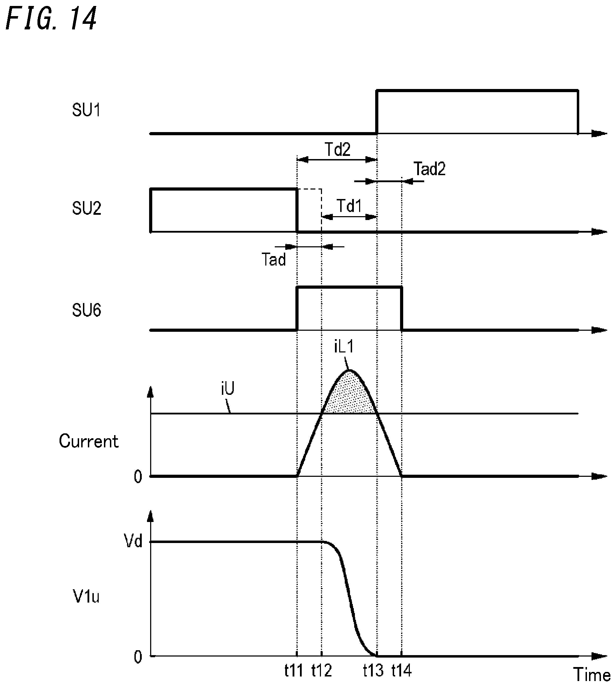

FIG. 14 illustrates how the power converter 100A according to the second embodiment operates in a situation where the polarity of a U-phase load current is positive. In FIG. 14, shown are the first control signals SU1, SU2, the second control signal SU6, the current iL1 flowing through the resonant inductor L1, and the voltage V1u across the first switching element 1U as for a situation where the target switching element is the first switching element 1U of the switching circuit 10U. In addition, in FIG. 14, also shown as Vd is the voltage value of the DC power supply E1.

If the target switching element is the first switching element 1U, in the switching circuit 10U, the voltage V2u across the second switching element 2U becomes Vd at the end time t13 of the second dead time period Td2 just before the high-level period of the first control signal SU1, and the voltage V1u across the first switching element 1U goes zero at the end time t13 of the second dead time period Td2 just before the high-level period of the first control signal SU1. Therefore, when the first control signal SU1 changes from low level to high level at the time t13, the first switching element 1U is subjected to zero-voltage soft switching. In the example illustrated in FIG. 14, the current iL1 starts flowing through the resonant inductor L1 at the beginning time t11 of the high-level period of the second control signal SU6, comes to have the same value as the load current iU at a time t12 when the predetermined amount of time (additional time Tad) has passed since the time t11, comes to have the same value as the load current iU at the end time t13 of the second dead time period Td2, and goes zero at a time t14 when the second predetermined amount of time Tad2 as long as the first predetermined amount of time that is the predetermined amount of time has passed since the time t13. In the signal generator circuit 52A, at the time t11 when the first control signal SU2 changes from high level to low level, the second control signal SU6 changes from low level to high level. The current iL1 flowing from the time t12 through the time t13 is a resonant current (i.e., a charging current for the resonant capacitor 9U) flowing from the regenerative capacitor 15 into the resonant capacitor 9U via the resonant inductor L1.

In the first period, each of the first switching element 1U, the second switching element 2U, and the fourth switching element 7U is in OFF state, and the third switching element 6U is in ON state. In the first period, the current iL1 flows along the path that passes through the regenerative capacitor 15, the resonant inductor L1, the diode 71, the third switching element 6U, and the AC terminal 41U in this order as in FIG. 8. In addition, in the first period, the load current iU flows along the path that passes through the second diode 5 connected to the second switching element 2U in antiparallel, the AC terminal 41U, and the AC load RA1 in this order as in FIG. 8.

In the second period, each of the first switching element 1U, the second switching element 2U, and the fourth switching element 7U is in OFF state, and the third switching element 6U is in ON state. In the second period, the current iL1 flows along the path that passes through the regenerative capacitor 15, the resonant inductor L1, the diode 71, and the third switching element 6U in this order and branches into a current flowing toward the AC terminal 41U and a current (resonant current) flowing toward the resonant capacitor 9U as in FIG. 9. In the second period, the resonant capacitor 9U is charged with the current flowing through the resonant capacitor 9.

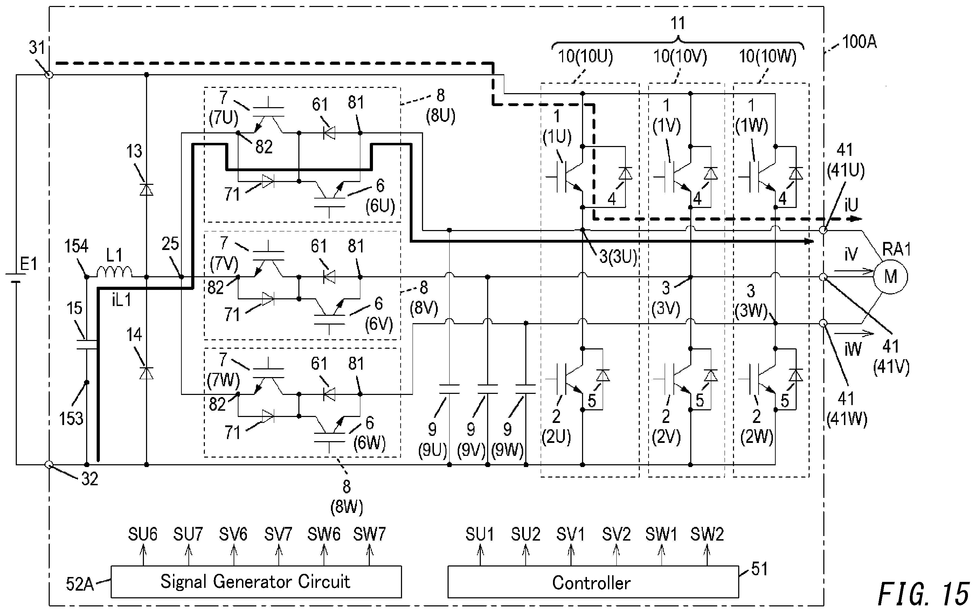

In the third period, the first switching element 1U is in ON state, each of the second switching element 2U and the fourth switching element 7U is in OFF state, and the third switching element 6U is in ON state. FIG. 15 illustrates how the power converter 100A according to the second embodiment operates in the third period. In FIG. 15, the current path of the current iL1 flowing through the resonant inductor L1 in the third period shown in FIG. 14 is indicated by the bold solid arrow and the current path of the load current iU flowing in the third period is indicated by the bold dashed arrow. In the third period, the current iL1 flows along the path that passes through the regenerative capacitor 15, the resonant inductor L1, the diode 71, the third switching element 6U, and the AC terminal 41U in this order. As a result, the current iL1 is reduced to zero. In addition, in the third period, the load current iU flows along the path that passes through the first DC terminal 31, the first switching element 1U, the AC terminal 41U, and the AC load RA1 in this order.

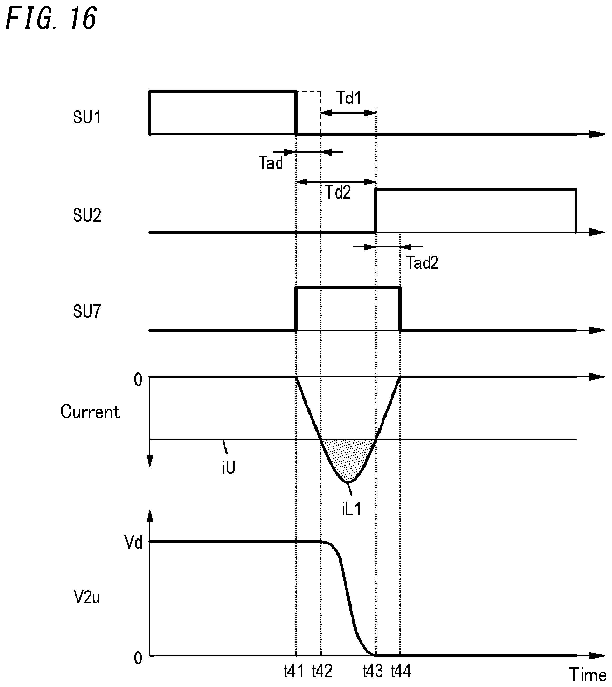

FIG. 16 illustrates how the power converter 100A according to the second embodiment operates in a situation where the polarity of the U-phase load current is negative. In FIG. 16, shown are the first control signals SU1, SU2, the second control signal SU7, the current iL1 flowing through the resonant inductor L1, and the voltage V2u across the second switching element 2U as for a situation where the target switching element is the second switching element 2U of the switching circuit 10U. In addition, in FIG. 11, also shown as Vd is the voltage value of the DC power supply E1.

If the target switching element is the second switching element 2U, in the switching circuit 10U, the voltage V1u across the first switching element 1U becomes Vd at the end time t43 of the second dead time period Td2 just before the high-level period of the first control signal SU2, and the voltage V2u across the second switching element 2U goes zero at the end time t43 of the second dead time period Td2. Therefore, when the first control signal SU2 changes from low level to high level at the time t43, the second switching element 2U is subjected to zero-voltage soft switching. In the example illustrated in FIG. 16, the current iL1 starts flowing through the resonant inductor L1 at the beginning time t41 of the high-level period of the second control signal SU7, comes to have the same value as the load current iU at a time t42 when the predetermined amount of time (additional time Tad) has passed since the time t41, comes to have the same value as the load current iU at the end time t43 of the second dead time period Td2, and goes zero at a time t44 when the second predetermined amount of time Tad2 as long as the first predetermined amount of time (that is the predetermined amount of time) has passed since the time t43. In the signal generator circuit 52A, at the time when the first control signal SU1 changes from high level to low level, the second control signal SU7 changes from low level to high level. The current iL1 flowing from the time t42 through the time t43 is a resonant current (i.e., a discharging current for the resonant capacitor 9U) flowing from the resonant capacitor 9U into the resonant inductor L1.

In FIG. 16, the first period is a period from the time t41 through the time t42. In the first period, each of the first switching element 1U, the second switching element 2U, and the third switching element 6U is in OFF state, and the fourth switching element 7U is in ON state. In the first period, the current iL1 flows along the path that passes through the AC terminal 41U, the diode 61, the fourth switching element 7U, the resonant inductor L1, and the regenerative capacitor 15 in this order. In addition, in the first period, the load current iU flows along the path that passes, in this order, through the AC load RA1, the AC terminal 41U, and the first diode 4 connected to the first switching element 1U in antiparallel.

In FIG. 16, the second period is a period from the time t42 through the time t43. In the second period, each of the first switching element 1U, the second switching element 2U, and the third switching element 6U is in OFF state, and the fourth switching element 7U is in ON state. In the second period, the current iL1 flowing through the resonant inductor L1 is a confluent current of a current flowing along the path that passes through the AC terminal 41U, the diode 61, the fourth switching element 7U, the resonant inductor L1, and the regenerative capacitor 15 in this order and a current (resonant current) flowing along the path that passes through the resonant capacitor 9U, the diode 61, the fourth switching element 7U, the resonant inductor L1, and the regenerative capacitor 15 in this order. In the second period, electricity is discharged from the resonant capacitor 9.

In FIG. 16, the third period is a period from the time t43 through the time t44. In the third period, the second switching element 2U is in ON state, each of the first switching element 1U and the third switching element 6U is in OFF state, and the fourth switching element 7U is in ON state. In the third period, the current iL1 flows along the path that passes through the AC terminal 41U, the diode 61, the fourth switching element 7U, the resonant inductor L1, and the regenerative capacitor 15 in this order. As a result, the absolute value of the current iL1 is reduced to zero. In addition, in the third period, the load current iU flows along the path that passes through the AC load RA1, the AC terminal 41U, the second switching element 2U, and the second DC terminal 32 in this order.

In the example described above, the second dead time period Td2 is set with respect to the switching circuit 10U. The same statement applies to the switching circuit 10V and the switching circuit 10W as well.

### (3) Advantages

In a power converter 100A according to the second embodiment, the controller 51 sets, with respect to each of the plurality of switching circuits 10, a second dead time period Td2 between the high-level period of the first control signal for the first switching element 1 and the high-level period of the first control signal for the second switching element 2. The second dead time period Td2 is defined by adding a predetermined amount of time (additional time Tad) to a first dead time period Td1. The first dead time period Td1 has been set in advance to prevent respective ON periods of the first switching element 1 and the second switching element 2 from overlapping with each other. The predetermined amount of time is determined based on the current value of a load current, inductance of the resonant inductor L1, and a voltage value of the regenerative capacitor 15. The signal generator circuit 52 generates, with respect to each of the plurality of switches 8, a second control signal having a high-level period adapted to the second dead time period Td2 for a corresponding one of the plurality of switching circuits 10.

This configuration allows for realizing zero-voltage soft switching without having the controller 51 directly control the plurality of switches 8 provided for the purpose of making zero-voltage soft switching.

In addition, in the power converter 100A according to the second embodiment, the signal generator circuit 52A synchronizes the beginning time of the high-level period of the second control signal for each of the plurality of switches 8 with the beginning time of the second dead time period Td2 and postpones the end time of the high-level period of the second control signal for each of the plurality of switches 8 by at least a third period from the end time of the second dead time period Td2. This allows the power converter 100A according to the second embodiment to adopt a configuration including neither the first clamping diode 13 nor the second clamping diode 14.

### (Third embodiment)

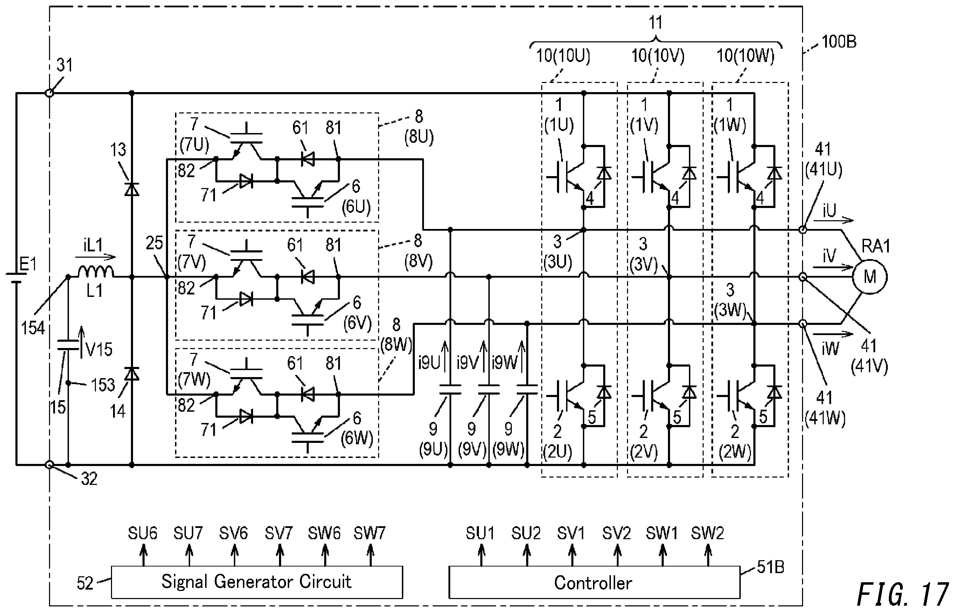

A power converter 100B according to a third embodiment will be described with reference to FIGS. 17-19. In the following description, any constituent element of the power converter 100B according to this third embodiment, having the same function as a counterpart of the power converter 100 (refer to FIG. 1) according to the first embodiment described above, will be designated by the same reference numeral as that counterpart's, and description thereof will be omitted herein.

### (1) Configuration

FIG. 17 is a circuit diagram of a system including a power converter 100B according to the third embodiment. As shown in FIG. 17, the power converter 100B includes a controller 51B instead of the controller 51 of the power converter 100, which is a difference from the power converter 100.

In the power converter 100B, the controller 51B, as well as the controller 51, generates the first control signals SU1, SU2, SV1, SV2, SV2, SW1, SW2, thereby controlling the plurality of first switching elements 1 and the plurality of second switching elements 2.

When setting the second dead time period Td2 with respect to each of the plurality of switching circuits 10, the controller 51B adds, if the polarity of the load current is positive, the predetermined amount of time (additional time Tad) to the first dead time period Td1 by shortening the high-level period of the first control signal for the first switching element 1.

When setting the second dead time period Td2 with respect to each of the plurality of switching circuits 10, the controller 51B adds, if the polarity of the load current is negative, the predetermined amount of time (additional time Tad) to the first dead time period Td1 by shortening the high-level period of the first control signal for the second switching element 2.

### (2) Operation

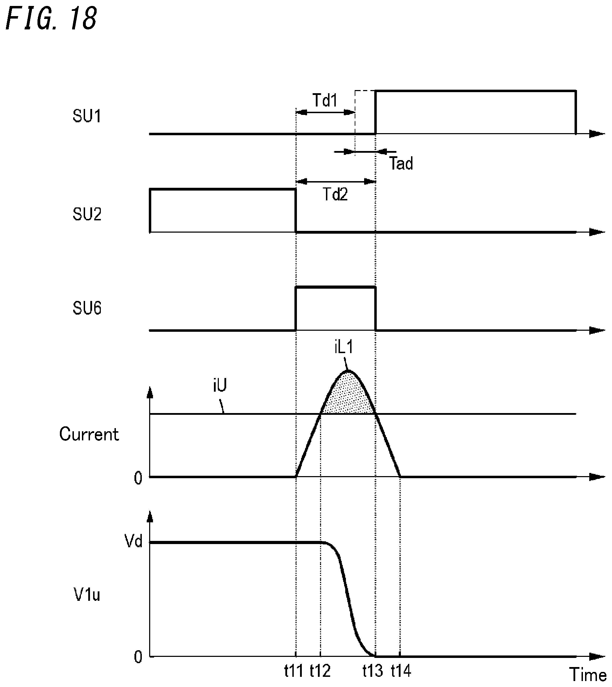

FIG. 18 illustrates how the power converter 100B according to the third embodiment operates in a situation where the polarity of the U-phase load current is positive. In FIG. 18, shown are the first control signals SU1, SU2, the second control signal SU6, the current iL1 flowing through the resonant inductor L1, and the voltage V1u across the first switching element 1U as for a situation where the target switching element is the first switching element 1U of the switching circuit 10U. In addition, in FIG. 18, also shown as Vd is the voltage value of the DC power supply E1.

If the target switching element is the first switching element 1U, in the switching circuit 10U, the voltage V2u across the second switching element 2U becomes Vd at the end time t13 of the second dead time period Td2 just before the high-level period of the first control signal SU1, and the voltage V1u across the first switching element 1U goes zero at the end time t13 of the second dead time period Td2 just before the high-level period of the first control signal SU1. Therefore, when the first control signal SU1 changes from low level to high level at the time t13, the first switching element 1U is subjected to zero-voltage soft switching. In the example illustrated in FIG. 18, the current iL1 starts flowing through the resonant inductor L1 at the beginning time t11 of the high-level period of the second control signal SU6, comes to have the same value as the load current iU at a time t12 when the predetermined amount of time (the additional time Tad) has passed since the time t11, comes to have the same value as the load current iU at the end time t13 of the second dead time period Td2, and goes zero at a time t14 when the second predetermined amount of time Tad2 as long as the first predetermined amount of time that is the predetermined amount of time has passed since the time t13. In the signal generator circuit 52, at the time t11 when the first control signal SU2 changes from high level to low level, the second control signal SU6 changes from low level to high level. The current iL1 flowing from the time t12 through the time t13 is a resonant current (i.e., a charging current for the resonant capacitor 9U) flowing from the regenerative capacitor 15 into the resonant capacitor 9U via the resonant inductor L1.

In the first period, each of the first switching element 1U, the second switching element 2U, and the fourth switching element 7U is in OFF state, and the third switching element 6U is in ON state. In the first period, the current iL1 flows along the path that passes through the regenerative capacitor 15, the resonant inductor L1, the diode 71, the third switching element 6U, and the AC terminal 41U in this order as in FIG. 8. In addition, in the first period, the load current iU flows along the path that passes through the second diode 5 connected to the second switching element 2U in antiparallel, the AC terminal 41U, and the AC load RA1 in this order as in FIG. 8.

In the second period, each of the first switching element 1U, the second switching element 2U, and the fourth switching element 7U is in OFF state, and the third switching element 6U is in ON state. In the second period, the current iL1 flows along the path that passes through the regenerative capacitor 15, the resonant inductor L1, the diode 71, and the third switching element 6U in this order and branches into a current flowing toward the AC terminal 41U and a current (resonant current) flowing toward the resonant capacitor 9U as in FIG. 9. In the second period, the resonant capacitor 9U is charged with the current flowing through the resonant capacitor 9.

In the third period, the first switching element 1U is in ON state, and each of the second switching element 2U, the third switching element 6U, and the fourth switching element 7U is in OFF state. In the third period, the current iL1 flows along the path that passes through the regenerative capacitor 15, the resonant inductor L1, and the clamping diode 13 in this order as in FIG. 10. As a result, the current iL1 is reduced to zero. In addition, in the third period, the load current iU flows along the path that passes through the first DC terminal 31, the first switching element 1U, the AC terminal 41U, and the AC load RA1 in this order as in FIG. 10.

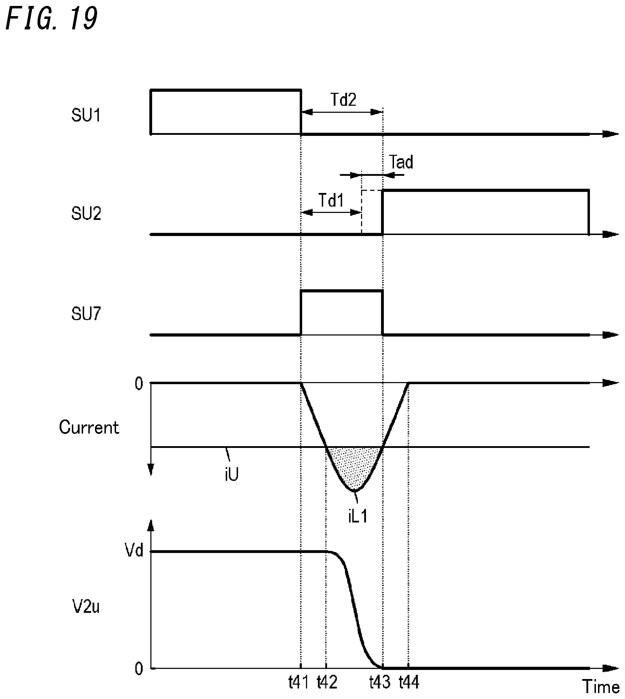

FIG. 19 illustrates how the power converter 100B according to the third embodiment operates in a situation where the polarity of the U-phase load current is negative. In FIG. 19, shown are the first control signals SU1, SU2, the second control signal SU7, the current iL1 flowing through the resonant inductor L1, and the voltage V2u across the second switching element 2U as for a situation where the target switching element is the second switching element 2U of the switching circuit 10U. In addition, in FIG. 19, also shown as Vd is the voltage value of the DC power supply E1.

If the target switching element is the second switching element 2U, in the switching circuit 10U, the voltage V1u across the first switching element 1U becomes Vd at the end time t43 of the second dead time period Td2 just before the high-level period of the first control signal SU2, and the voltage V2u across the second switching element 2U goes zero at the end time t43 of the second dead time period Td2. Therefore, when the first control signal SU2 changes from low level to high level at the time t43, the second switching element 2U is subjected to zero-voltage soft switching. In the example illustrated in FIG. 19, the current iL1 starts flowing through the resonant inductor L1 at the beginning time t41 of the high-level period of the second control signal SU7, comes to have the same value as the load current iU at a time t42 when the time as long as the predetermined amount of time (the additional time Tad) has passed since the time t41, comes to have the same value as the load current iU at the end time t43 of the second dead time period Td2, and goes zero at a time t44 when the time as long as the predetermined amount of time (additional time Tad) has passed since the time t43. In the signal generator circuit 52, at the time when the first control signal SU1 changes from high level to low level, the second control signal SU7 changes from low level to high level. The current iL1 flowing from the time t42 through the time t43 is a resonant current (i.e., a discharging current for the resonant capacitor 9U) flowing from the resonant capacitor 9U into the resonant inductor L1.

In FIG. 19, the first period is a period from the time t41 through the time t42. In the first period, each of the first switching element 1U, the second switching element 2U, and the third switching element 6U is in OFF state, and the fourth switching element 7U is in ON state. In the first period, the current iL1 flows along the path that passes through the AC terminal 41U, the diode 61, the fourth switching element 7U, the resonant inductor L1, and the regenerative capacitor 15 in this order. In addition, in the first period, the load current iU flows along the path that passes, in this order, through the AC load RA1, the AC terminal 41U, and the first diode 4 connected to the first switching element 1U in antiparallel.

In FIG. 19, the second period is a period from the time t42 through the time t43. In the second period, each of the first switching element 1U, the second switching element 2U, and the third switching element 6U is in OFF state, and the fourth switching element 7U is in ON state. In the second period, the current iL1 flowing through the resonant inductor L1 is a confluent current of a current flowing along the path that passes through the AC terminal 41U, the diode 61, the fourth switching element 7U, the resonant inductor L1, and the regenerative capacitor 15 in this order and a current (resonant current) flowing along the path that passes through the resonant capacitor 9U, the diode 61, the fourth switching element 7U, the resonant inductor L1, and the regenerative capacitor 15 in this order. In the second period, electricity is discharged from the resonant capacitor 9.

In FIG. 19, the third period is a period from the time t43 through the time t44. In the third period, the second switching element 2U is in ON state and each of the first switching element 1U, the third switching element 6U, and the fourth switching element 7U is in OFF state. In the third period, the current iL1 flows along the path that passes through the second clamping diode 14, the resonant inductor L1, and the regenerative capacitor 15 in this order. As a result, the absolute value of the current iL1 is reduced to zero. In addition, in the third period, the load current iU flows along the path that passes through the AC load RA1, the AC terminal 41U, the second switching element 2U, and the second DC terminal 32 in this order.

In the example described above, the second dead time period Td2 is set with respect to the switching circuit 10U. The same statement applies to the switching circuit 10V and the switching circuit 10W as well.

### (3) Advantages

In a power converter 100B according to the third embodiment, the controller 51B extends a first dead time period Td1 to a second dead time period Td2 by a predetermined amount of time (additional time Tad) corresponding to the current value of a load current, the inductance of the resonant inductor L1, and the voltage value of the regenerative capacitor 15. The first dead time period Td1 has been set in advance, with respect to each of the plurality of switching circuits 10, between the high-level period of a first control signal for the first switching element 1 and the high-level period of a first control signal for the second switching element 2 to prevent respective ON periods of the first switching element 1 and the second switching element 2 from overlapping with each other. The signal generator circuit 52 generates, with respect to each of the plurality of switches 8, a second control signal having a high-level period adapted to the second dead time period Td2 for a corresponding one of the plurality of switching circuits 10.

This configuration allows for realizing zero-voltage soft switching without having the controller 51 directly control a plurality of switches 8 provided for the purpose of making zero-voltage soft switching.

In addition, in the power converter 100B, when extending the first dead time period Td1 to the second deadtime period Td2 with respect to each of the plurality of switching circuits 10, the controller 51B extends, if the polarity of the load current is positive, the first deadtime period by the predetermined amount of time (additional time Tad) by shortening the high-level period of the first control signal for the first switching element 1, and extends, if the polarity of the load current is negative, the first dead time period Td1 by the predetermined amount of time (additional time Tad) by shortening the high-level period of the first control signal for the second switching element 2.

This configuration allows for realizing zero-voltage soft switching.

### (Fourth embodiment)

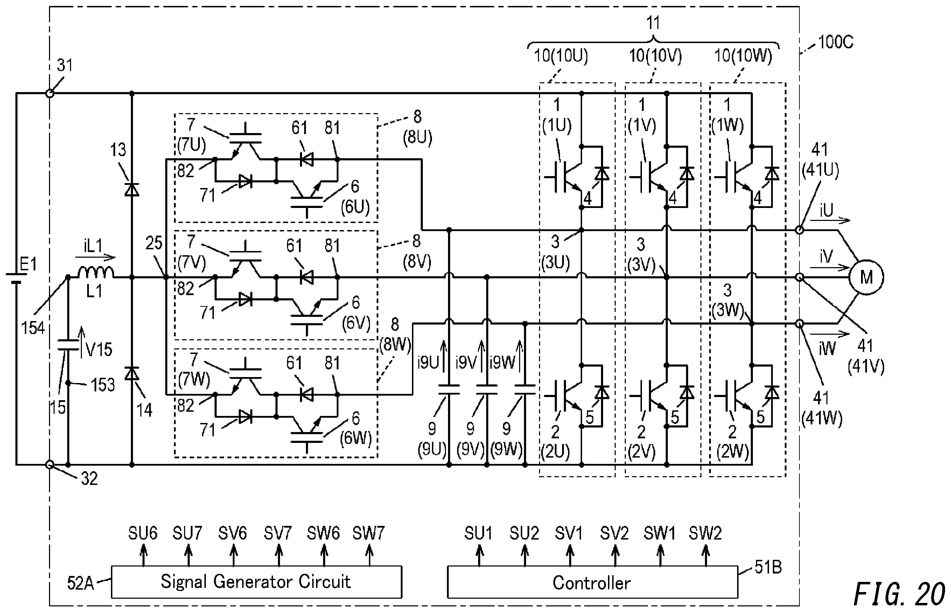

A power converter 100C according to a fourth embodiment will be described with reference to FIGS. 20-22. In the following description, any constituent element of the power converter 100C according to this fourth embodiment, having the same function as a counterpart of the power converter 100B (refer to FIG. 17) according to the third embodiment described above, will be designated by the same reference numeral as that counterpart's, and description thereof will be omitted herein.

### (1) Configuration

FIG. 20 is a circuit diagram of a system including a power converter 100C according to the fourth embodiment. As shown in FIG. 20, the power converter 100C includes a signal generator circuit 52A instead of the signal generator circuit 52 of the power converter 100B, which is a difference from the power converter 100B. The signal generator circuit 52A has the same configuration as the signal generator circuit 52A (refer to FIG. 13) of the power converter 100A (refer to FIG. 12), and therefore, description thereof will be omitted herein.

### (2) Operation

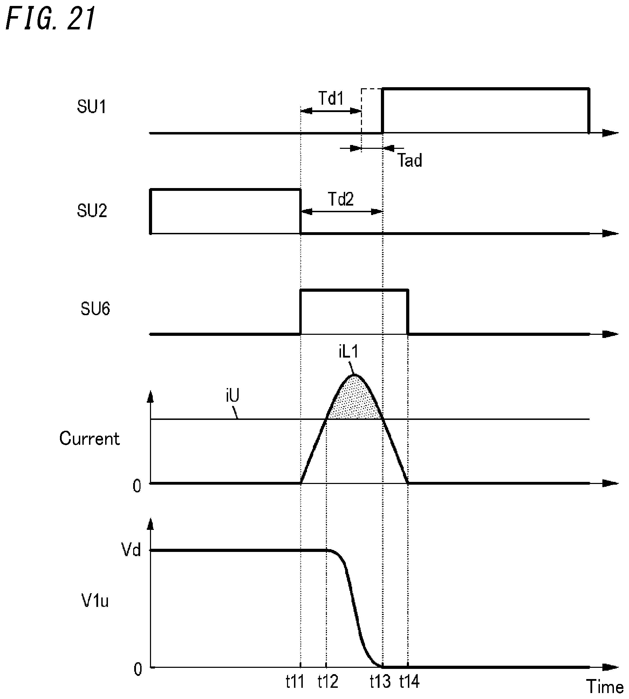

FIG. 21 illustrates how the power converter 100C according to the fourth embodiment operates in a situation where the polarity of a U-phase load current is positive. In FIG. 21, shown are the first control signals SU1, SU2, the second control signal SU6, the current iL1 flowing through the resonant inductor L1, and the voltage V1u across the first switching element 1U as for a situation where the target switching element is the first switching element 1U of the switching circuit 10U. In addition, in FIG. 21, also shown as Vd is the voltage value of the DC power supply E1.

If the target switching element is the first switching element 1U, in the switching circuit 10U, the voltage V2u across the second switching element 2U becomes Vd at the end time t13 of the second dead time period Td2 just before the high-level period of the first control signal SU1, and the voltage V1u across the first switching element 1U goes zero at the end time t13 of the second dead time period Td2 just before the high-level period of the first control signal SU1. Therefore, when the first control signal SU1 changes from low level to high level at the time t13, the first switching element 1U is subjected to zero-voltage soft switching. In the example illustrated in FIG. 21, the current iL1 starts flowing through the resonant inductor L1 at the beginning time t11 of the high-level period of the second control signal SU6, comes to have the same value as the load current iU at a time t12 when the first period has passed since the time t11, comes to have the same value as the load current iU at the end time t13 of the second dead time period Td2, and goes zero at a time t14 when the third period has passed since the time t13. In the signal generator circuit 52A, at the time t11 when the first control signal SU2 changes from high level to low level, the second control signal SU6 changes from low level to high level. The current iL1 flowing from the time t12 through the time t13 is a resonant current (i.e., a charging current for the resonant capacitor 9U) flowing from the regenerative capacitor 15 into the resonant capacitor 9U via the resonant inductor L1.

In the first period, each of the first switching element 1U, the second switching element 2U, and the fourth switching element 7U is in OFF state, and the third switching element 6U is in ON state. In the first period, the current iL1 flows along the path that passes through the regenerative capacitor 15, the resonant inductor L1, the diode 71, the third switching element 6U, and the AC terminal 41U in this order as in FIG. 8. In addition, in the first period, the load current iU flows along the path that passes through the second diode 5 connected to the second switching element 2U in antiparallel, the AC terminal 41U, and the AC load RA1 in this order as in FIG. 8.

In the second period, each of the first switching element 1U, the second switching element 2U, and the fourth switching element 7U is in OFF state, and the third switching element 6U is in ON state. In the second period, the current iL1 flows along the path that passes through the regenerative capacitor 15, the resonant inductor L1, the diode 71, and the third switching element 6U in this order and branches into a current flowing toward the AC terminal 41U and a current (resonant current) flowing toward the resonant capacitor 9U as in FIG. 9. In the second period, the resonant capacitor 9U is charged with the current flowing through the resonant capacitor 9.

In the third period, the first switching element 1U is in ON state, each of the second switching element 2U and the fourth switching element 7U is in OFF state, and the third switching element 6U is in ON state. In the third period, the current iL1 flows along the path that passes through the regenerative capacitor 15, the resonant inductor L1, the diode 71, the third switching element 6U, and the AC terminal 41U in this order as in FIG. 15. As a result, the current iL1 is reduced to zero. In addition, in the third period, the load current iU flows along the path that passes through the first DC terminal 31, the first switching element 1U, the AC terminal 41U, and the AC load RA1 in this order as in FIG. 15.

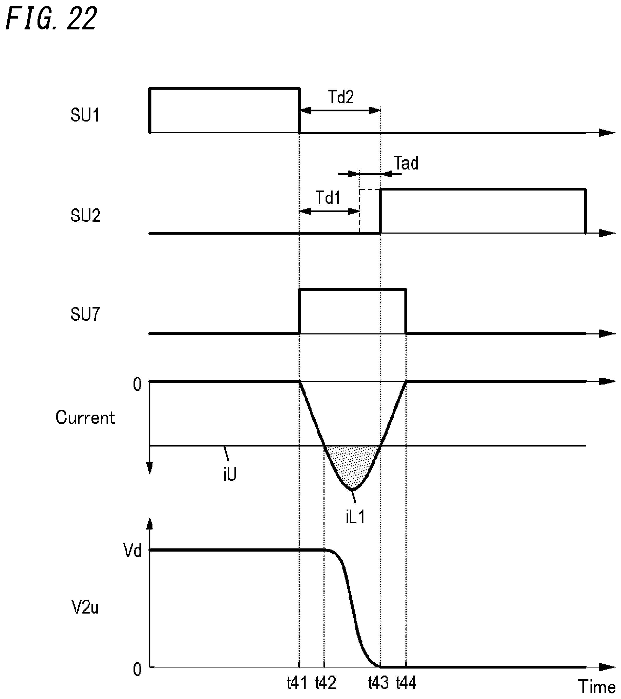

FIG. 22 illustrates how the power converter 100C according to the fourth embodiment operates in a situation where the polarity of the U-phase load current is negative. In FIG. 22, shown are the first control signals SU1, SU2, the second control signal SU7, the current iL1 flowing through the resonant inductor L1, and the voltage V2u across the second switching element 2U as for a situation where the target switching element is the second switching element 2U of the switching circuit 10U. In addition, in FIG. 22, also shown as Vd is the voltage value of the DC power supply E1.

If the target switching element is the second switching element 2U, in the switching circuit 10U, the voltage V1u across the first switching element 1U becomes Vd at the end time t43 of the second dead time period Td2 just before the high-level period of the first control signal SU2, and the voltage V2u across the second switching element 2U goes zero at the end time t43 of the second dead time period Td2. Therefore, when the first control signal SU2 changes from low level to high level at the time t43, the second switching element 2U is subjected to zero-voltage soft switching. In the example illustrated in FIG. 22, the current iL1 starts flowing through the resonant inductor L1 at the beginning time t41 of the high-level period of the second control signal SU7, comes to have the same value as the load current iU at a time t42 when the time as long as the predetermined amount of time (additional time Tad) has passed since the time t41, comes to have the same value as the load current iU at the end time t43 of the second dead time period Td2, and goes zero at a time t44 when the time as long as the predetermined amount of time (additional time Tad) has passed since the time t43. In the signal generator circuit 52A, at the time when the first control signal SU1 changes from high level to low level, the second control signal SU7 changes from low level to high level. The current iL1 flowing from the time t42 through the time t43 is a resonant current (i.e., a discharging current for the resonant capacitor 9U) flowing from the resonant capacitor 9U into the resonant inductor L1.

In FIG. 22, the first period is a period from the time t41 through the time t42. In the first period, each of the first switching element 1U, the second switching element 2U, and the third switching element 6U is in OFF state, and the fourth switching element 7U is in ON state. In the first period, the current iL1 flows along the path that passes through the AC terminal 41U, the diode 61, the fourth switching element 7U, the resonant inductor L1, and the regenerative capacitor 15 in this order. In addition, in the first period, the load current iU flows along the path that passes, in this order, through the AC load RA1, the AC terminal 41U, and the first diode 4 connected to the first switching element 1U in antiparallel.

In FIG. 22, the second period is a period from the time t42 through the time t43. In the second period, each of the first switching element 1U, the second switching element 2U, and the third switching element 6U is in OFF state, and the fourth switching element 7U is in ON state. In the second period, the current iL1 flowing through the resonant inductor L1 is a confluent current of a current flowing along the path that passes through the AC terminal 41U, the diode 61, the fourth switching element 7U, the resonant inductor L1, and the regenerative capacitor 15 in this order and a current flowing along the path that passes through the resonant capacitor 9U, the diode 61, the fourth switching element 7U, the resonant inductor L1, and the regenerative capacitor 15 in this order. In the second period, electricity is discharged from the resonant capacitor 9.

In FIG. 22, the third period is a period from the time t43 through the time t44. In the third period, the second switching element 2U is in ON state, each of the first switching element 1U and the third switching element 6U is in OFF state, and the fourth switching element 7U is in ON state. In the third period, the current iL1 flows along the path that passes through the AC terminal 41U, the diode 61, the fourth switching element 7U, the resonant inductor L1, and the regenerative capacitor 15 in this order. As a result, the absolute value of the current iL1 is reduced to zero. In addition, in the third period, the load current iU flows along the path that passes through the AC load RA1, the AC terminal 41U, the second switching element 2U, and the second DC terminal 32 in this order.

In the example described above, the first dead time period Td1 is extended to the second dead time period Td2 with respect to the switching circuit 10U. The same statement applies to the switching circuit 10V and the switching circuit 10W as well.

### (3) Advantages

In a power converter 100C according to the fourth embodiment, the controller 51B extends a first dead time period Td1 to a second dead time period Td2 by a predetermined amount of time (additional time Tad) corresponding to the current value of a load current, the inductance of the resonant inductor L1, and the voltage value of the regenerative capacitor 15. The first dead time period Td1 has been set in advance, with respect to each of the plurality of switching circuits 10, between the high-level period of a first control signal for the first switching element 1 and the high-level period of a first control signal for the second switching element 2 to prevent respective ON periods of the first switching element 1 and the second switching element 2 from overlapping with each other. The signal generator circuit 52A generates, with respect to each of the plurality of switches 8, a second control signal having a high-level period adapted to the second dead time period Td2 for a corresponding one of the plurality of switching circuits 10.

This configuration allows for realizing zero-voltage soft switching without having the controller 51 directly control a plurality of switches 8 provided for the purpose of making zero-voltage soft switching.

In addition, in the power converter 100A according to the fourth embodiment, the signal generator circuit 52A synchronizes the beginning time of the high-level period of the second control signal for each of the plurality of switches 8 with the beginning time of the second dead time period Td2 and postpones the end time of the high-level period of the second control signal for each of the plurality of switches 8 by at least the third period from with the end time of the second dead time period Td2. This allows the power converter 100C according to the fourth embodiment to adopt a configuration including neither the first clamping diode 13 nor the second clamping diode 14.

### (Fifth embodiment)

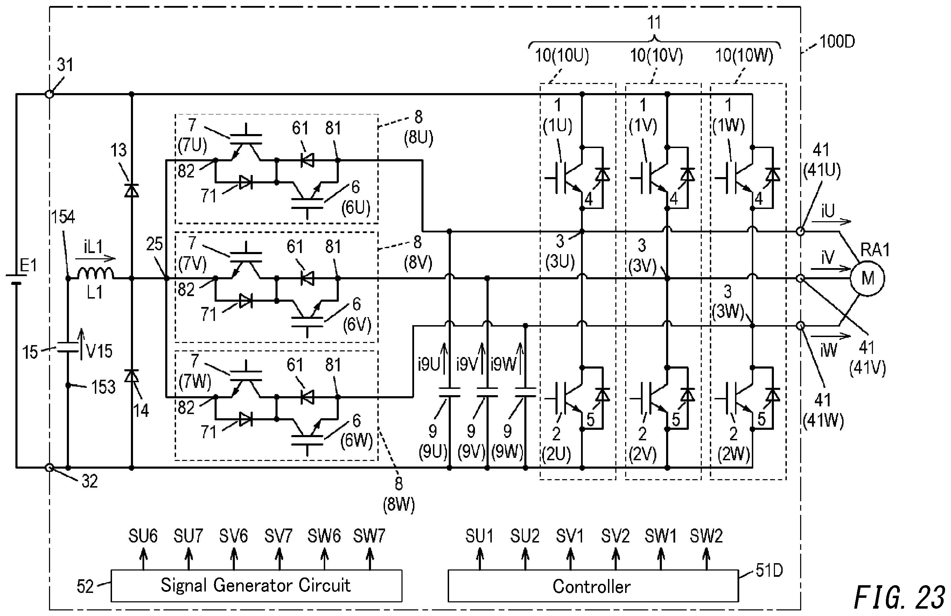

A power converter 100D according to a fifth embodiment will be described with reference to FIGS. 23-25. In the following description, any constituent element of the power converter 100D according to this fifth embodiment, having the same function as a counterpart of the power converter 100 (refer to FIG. 1) according to the first embodiment described above, will be designated by the same reference numeral as that counterpart's, and description thereof will be omitted herein.

### (1) Configuration

FIG. 23 is a circuit diagram of a system including a power converter 100D according to the fifth embodiment. As shown in FIG. 23, the power converter 100D includes a controller 51D instead of the controller 51 of the power converter 100, which is a difference from the power converter 100.

In the power converter 100D, the controller 51D, as well as the controller 51, generates the first control signals SU1, SU2, SV1, SV2, SV2, SW1, SW2, thereby controlling the plurality of first switching elements 1 and the plurality of second switching elements 2.

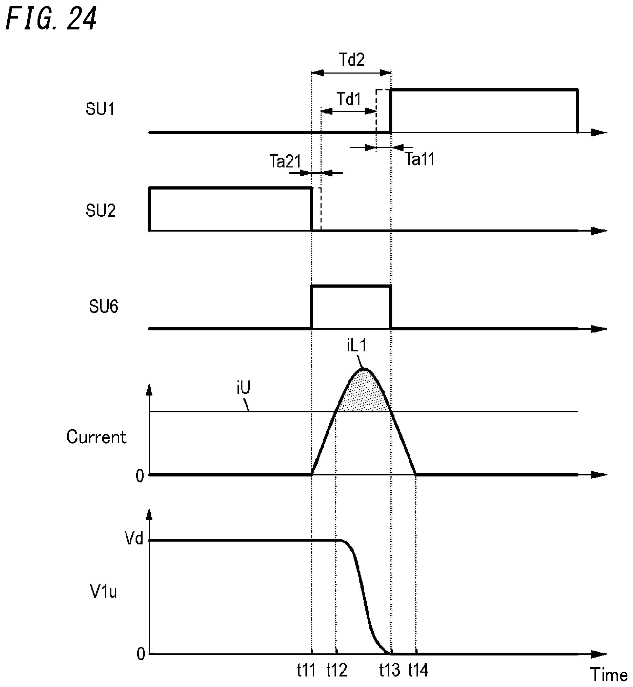

When extending the first dead time period Td1 to the second dead time period Td2 with respect to each of the plurality of switching circuits 10, the controller 51D extends, if the polarity of the load current is positive, the first dead time period Td1 by the predetermined amount of time by advancing the end time of the high-level period of the first control signal for the second switching element 2 and postponing the beginning time of the high-level period of the first control signal for the first switching element 1. If the end time of the high-level period of the first control signal for the second switching element 2 is advanced by Ta21 (refer to FIG. 24) and the beginning time of the high-level period of the first control signal for the first switching element 1 is postponed by Ta11 (refer to FIG. 24), then the predetermined amount of time is Ta11 + Ta 21.

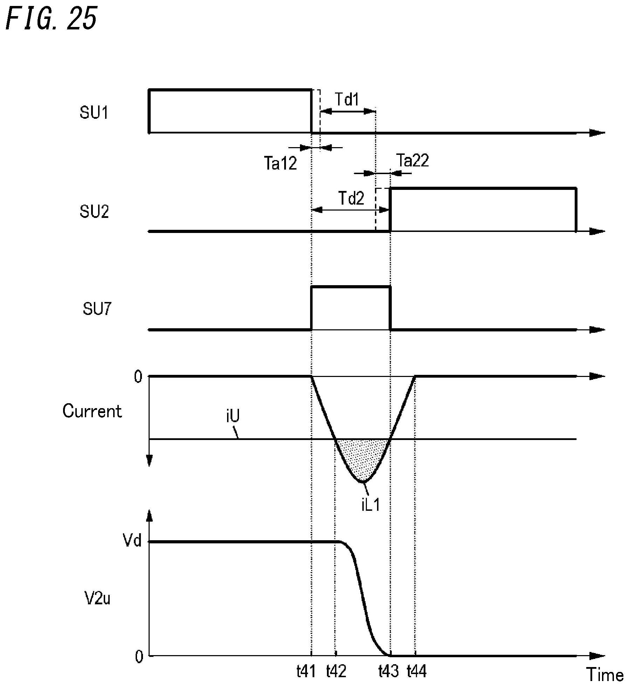

The controller 51D extends, if the polarity of the load current is negative, the first dead time period Td1 by the predetermined amount of time by advancing the end time of the high-level period of the first control signal for the first switching element 1 and postponing the beginning time of the high-level period of the first control signal for the second switching element 2. If the end time of the high-level period of the first control signal for the first switching element 1 is advanced by Ta12 (refer to FIG. 25) and the beginning time of the high-level period of the first control signal for the second switching element 2 is postponed by Ta22 (refer to FIG. 25), then the predetermined amount of time is Ta12 + Ta22.

### (2) Operation

FIG. 24 illustrates how the power converter 100D according to the fifth embodiment operates in a situation where the polarity of the U-phase load current is positive. In FIG. 24, shown are the first control signals SU1, SU2, the second control signal SU6, the current iL1 flowing through the resonant inductor L1, and the voltage V1u across the first switching element 1U as for a situation where the target switching element is the first switching element 1U of the switching circuit 10U. In addition, in FIG. 24, also shown as Vd is the voltage value of the DC power supply E1.

If the target switching element is the first switching element 1U, in the switching circuit 10U, the voltage V2u across the second switching element 2U becomes Vd at the end time t13 of the second dead time period Td2 just before the high-level period of the first control signal SU1, and the voltage V1u across the first switching element 1U goes zero at the end time t13 of the second dead time period Td2 just before the high-level period of the first control signal SU1. Therefore, when the first control signal SU1 changes from low level to high level at the time t13, the first switching element 1U is subjected to zero-voltage soft switching. In the example illustrated in FIG. 24, the current iL1 starts flowing through the resonant inductor L1 at the beginning time t11 of the high-level period of the second control signal SU6, comes to have the same value as the load current iU at a time t12 when the time as long as the additional time Tad has passed since the time t11, comes to have the same value as the load current iU at the end time t13 of the second dead time period Td2, and goes zero at a time t14 when the third period has passed since the time t13. In the signal generator circuit 52, at the time t11 when the first control signal SU2 changes from high level to low level, the second control signal SU6 changes from low level to high level. The current iL1 flowing from the time t12 through the time t13 is a resonant current (i.e., a charging current for the resonant capacitor 9U) flowing from the regenerative capacitor 15 into the resonant capacitor 9U via the resonant inductor L1.

In the first period, each of the first switching element 1U, the second switching element 2U, and the fourth switching element 7U is in OFF state, and the third switching element 6U is in ON state. In the first period, the current iL1 flows along the path that passes through the regenerative capacitor 15, the resonant inductor L1, the diode 71, the third switching element 6U, and the AC terminal 41U in this order as in FIG. 8. In addition, in the first period T01, the load current iU flows along the path that passes through the second diode 5 connected to the second switching element 2U in antiparallel, the AC terminal 41U, and the AC load RA1 in this order as in FIG. 8.

In the second period, each of the first switching element 1U, the second switching element 2U, and the fourth switching element 7U is in OFF state, and the third switching element 6U is in ON state. In the second period, the current iL1 flows along the path that passes through the regenerative capacitor 15, the resonant inductor L1, the diode 71, and the third switching element 6U in this order and branches into a current flowing toward the AC terminal 41U and a current (resonant current) flowing toward the resonant capacitor 9U as in FIG. 9. In the second period, the resonant capacitor 9U is charged with the current flowing through the resonant capacitor 9.

In the third period, the first switching element 1U is in ON state, and each of the second switching element 2U, the third switching element 6U, and the fourth switching element 7U is in OFF state. In the third period, the current iL1 flows along the path that passes through the regenerative capacitor 15, the resonant inductor L1, and the first clamping diode 13 in this order as in FIG. 10. As a result, the current iL1 is reduced to zero. In addition, in the third period, the load current iU flows along the path that passes through the first DC terminal 31, the first switching element 1U, the AC terminal 41U, and the AC load RA1 in this order as in FIG. 10.

FIG. 25 illustrates how the power converter 100D according to the fifth embodiment operates in a situation where the polarity of the U-phase load current is negative. In FIG. 25, shown are the first control signals SU1, SU2, the second control signal SU7, the current iL1 flowing through the resonant inductor L1, and the voltage V2u across the second switching element 2U as for a situation where the target switching element is the second switching element 2U of the switching circuit 10U. In addition, in FIG. 25, also shown as Vd is the voltage value of the DC power supply E1.

If the target switching element is the second switching element 2U, in the switching circuit 10U, the voltage V1u across the first switching element 1U becomes Vd at the end time t43 of the second dead time period Td2 just before the high-level period of the first control signal SU2, and the voltage V2u across the second switching element 2U goes zero at the end time t43 of the second dead time period Td2. Therefore, when the first control signal SU2 changes from low level to high level at the time t43, the second switching element 2U is subjected to zero-voltage soft switching. In the example illustrated in FIG. 25, the current iL1 starts flowing through the resonant inductor L1 at the beginning time t41 of the high-level period of the second control signal SU7, comes to have the same value as the load current iU at a time t42 when the time as long as the predetermined amount of time has passed since the time t41, comes to have the same value as the load current iU at the end time t43 of the second dead time period Td2, and goes zero at a time t44 when the time as long as the predetermined amount of time has passed since the time t43. In the signal generator circuit 52, at the time when the first control signal SU1 changes from high level to low level, the second control signal SU7 changes from low level to high level. The current iL1 flowing from the time t42 through the time t43 is a resonant current (i.e., a discharging current for the resonant capacitor 9U) flowing from the resonant capacitor 9U into the resonant inductor L1.

In FIG. 25, the first period is a period from the time t41 through the time t42. In the first period, each of the first switching element 1U, the second switching element 2U, and the third switching element 6U is in OFF state, and the fourth switching element 7U is in ON state. In the first period, the current iL1 flows along the path that passes through the AC terminal 41U, the diode 61, the fourth switching element 7U, the resonant inductor L1, and the regenerative capacitor 15 in this order. In addition, in the first period T01, the load current iU flows along the path that passes, in this order, through the AC load RA1, the AC terminal 41U, and the first diode 4 connected to the first switching element 1U in antiparallel.

In FIG. 25, the second period is a period from the time t42 through the time t43. In the second period, each of the first switching element 1U, the second switching element 2U, and the third switching element 6U is in OFF state, and the fourth switching element 7U is in ON state. In the second period, the current iL1 flowing through the resonant inductor L1 is a confluent current of a current flowing along the path that passes through the AC terminal 41U, the diode 61, the fourth switching element 7U, the resonant inductor L1, and the regenerative capacitor 15 in this order and a current (resonant current) flowing along the path that passes through the resonant capacitor 9U, the diode 61, the fourth switching element 7U, the resonant inductor L1, and the regenerative capacitor 15 in this order. In the second period, electricity is discharged from the resonant capacitor 9.

In FIG. 25, the third period is a period from the time t43 through the time t44. In the third period, the second switching element 2U is in ON state and each of the first switching element 1U, the third switching element 6U, and the fourth switching element 7U is in OFF state. In the third period, the current iL1 flows along the path that passes through the second clamping diode 14, the resonant inductor L1, and the regenerative capacitor 15 in this order. As a result, the absolute value of the current iL1 is reduced to zero. In addition, in the third period, the load current iU flows along the path that passes through the AC load RA1, the AC terminal 41U, the second switching element 2U, and the second DC terminal 32 in this order.

In the example described above, the first dead time period Td1 is extended to the second dead time period Td2 with respect to the switching circuit 10U. The same statement applies to the switching circuit 10V and the switching circuit 10W as well.

### (3) Advantages

In a power converter 100D according to the fifth embodiment, the controller 51D sets, with respect to each of the plurality of switching circuits 10, a second dead time period Td2 between the high-level period of a first control signal for the first switching element 1 and the high-level period of a first control signal for the second switching element 2. The second dead time period Td2 is defined by adding a predetermined amount of time (additional time Tad) to a first dead time period Td1. The first dead time period Td1 has been set in advance to prevent respective ON periods of the first switching element 1 and the second switching element 2 from overlapping with each other. The predetermined amount of time is determined based on the current value of a load current, the inductance of the resonant inductor L1, and the voltage value of the regenerative capacitor 15. The signal generator circuit 52 generates, with respect to each of the plurality of switches 8, a second control signal having a high-level period adapted to the second dead time period Td2 for a corresponding one of the plurality of switching circuits 10.

This configuration allows for realizing zero-voltage soft switching without having the controller 51D directly control a plurality of switches 8 provided for the purpose of making zero-voltage soft switching.

In addition, in the power converter 100D, when setting the second dead time period Td2 with respect to each of the plurality of switching circuits 10, the controller 51D adds, if the polarity of the load current is positive, the predetermined amount of time to the first dead time period Td1 by advancing the end time of the high-level period of the first control signal for the second switching element 2 and postponing the beginning time of the high-level period of the first control signal for the first switching element 1. On the other hand, if the polarity of the load current is negative, the controller 51D adds the predetermined amount of time to the first dead time period Td1 by advancing the end time of the high-level period of the first control signal for the first switching element 1 and postponing the beginning time of the high-level period of the first control signal for the second switching element 2.

This configuration allows for realizing zero-voltage soft switching while further reducing dead time loss and a dead time error.

### (Sixth embodiment)

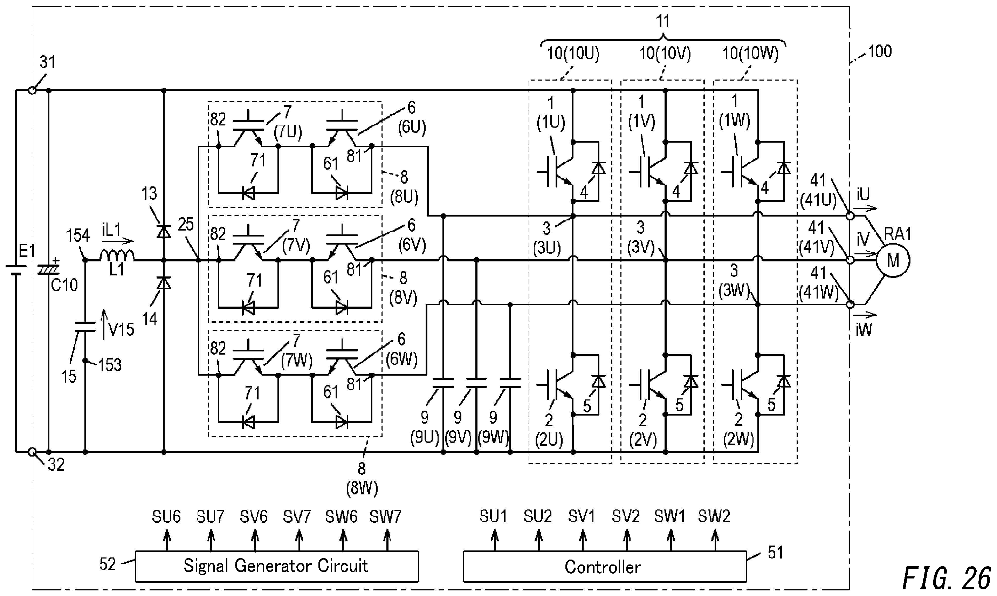

A power converter 100 according to a sixth embodiment will be described with reference to FIG. 26. FIG. 26 is a circuit diagram of a system including the power converter 100 according to the sixth embodiment. In the following description, any constituent element of the power converter 100 according to this sixth embodiment, having the same function as a counterpart of the power converter 100 (refer to FIG. 1) according to the first embodiment described above, will be designated by the same reference numeral as that counterpart's, and description thereof will be omitted herein.

In the power converter 100 according to the sixth embodiment, in each of the plurality of switches 8, the third switching element 6 and fourth switching element 7 thereof are connected in anti-series. In the power converter 100 according to the sixth embodiment, in each of the plurality of switches 8, the second main terminal (emitter terminal) of the third switching element 6 and the second main terminal (emitter terminal) of the fourth switching element 7 are connected to each other, the first main terminal (collector terminal) of the third switching element 6 is connected to the connection node 3 of a corresponding one of the plurality of switching circuits 10, and the first terminal (collector terminal) of the fourth switching element 7 is connected to the resonant inductor L1. In addition, each of the plurality of switches 8 further includes a diode 61 connected to the third switching element 6 in antiparallel and a diode 71 connected to the fourth switching element 7 in antiparallel.

In the power converter 100 according to the sixth embodiment, each of the third switching element 6 and the fourth switching element 7 may be replaced with either a MOSFET or a bipolar transistor. In that case, the diode 61 and diode 71 shown in FIG. 26 may each be replaced with, for example, either a parasitic diode of the replacement element or an element built in one chip of the replacement element. Also, in the power converter 100 according to the sixth embodiment, the diode 61 and the diode 71 do not have to be provided as external elements for the third switching element 6 and the fourth switching element 7, respectively, but may also be elements built in one chip.

The power converter 100 according to the sixth embodiment achieves the same advantages as the power converter 100 according to the first embodiment.

### (Seventh embodiment)

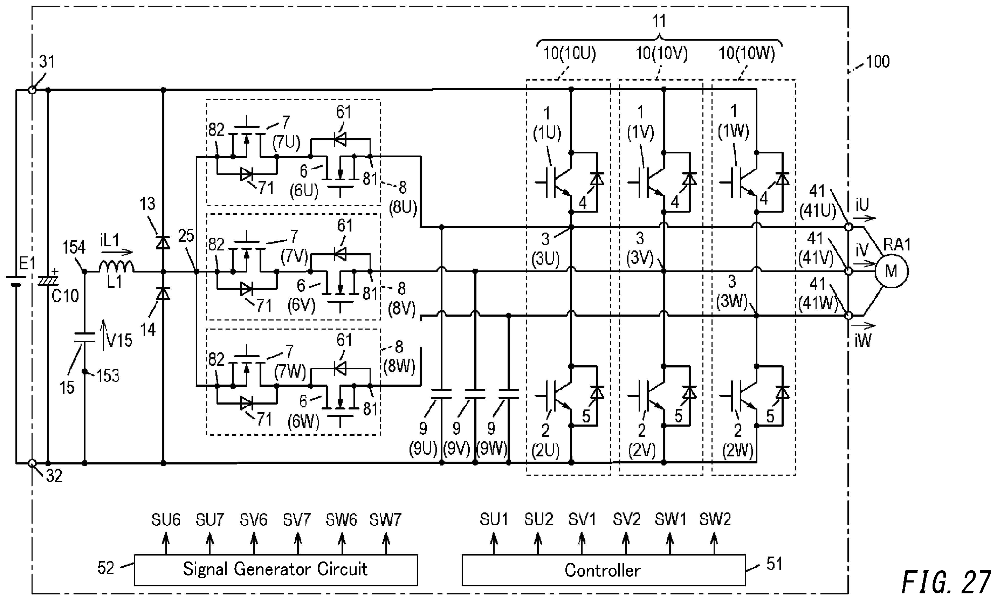

A power converter 100 according to a seventh embodiment will be described with reference to FIG. 27. FIG. 27 is a circuit diagram of a system including the power converter 100 according to the seventh embodiment. In the following description, any constituent element of the power converter 100 according to this seventh embodiment, having the same function as a counterpart of the power converter 100 (refer to FIG. 1) according to the first embodiment described above, will be designated by the same reference numeral as that counterpart's, and description thereof will be omitted herein.

In the power converter 100 according to the seventh embodiment, in each of the plurality of switches 8, each of the third switching element 6 and the fourth switching element 7 is implemented as a MOSFET, and the third switching element 6 and the fourth switching element 7 are connected in anti-series. In the power converter 100 according to the seventh embodiment, in each of the plurality of switches 8, the first main terminal (drain terminal) of the third switching element 6 and the first main terminal (drain terminal) of the fourth switching element 7 are connected to each other. In addition, each of the plurality of switches 8 further includes a diode 61 connected to the third switching element 6 in antiparallel and a diode 71 connected to the fourth switching element 7 in antiparallel. In each of the plurality of switches 8, the second main terminal (source terminal) of the fourth switching element 7 is connected to the resonant inductor L1. In each of the plurality of switches 8, the second main terminal (source terminal) of the third switching element 6 is connected to the connection node 3 of a switching circuit 10 corresponding to the switch 8 including the third switching element 6.

The power converter 100 according to the seventh embodiment achieves the same advantages as the power converter 100 according to the first embodiment.

### (Eighth embodiment)

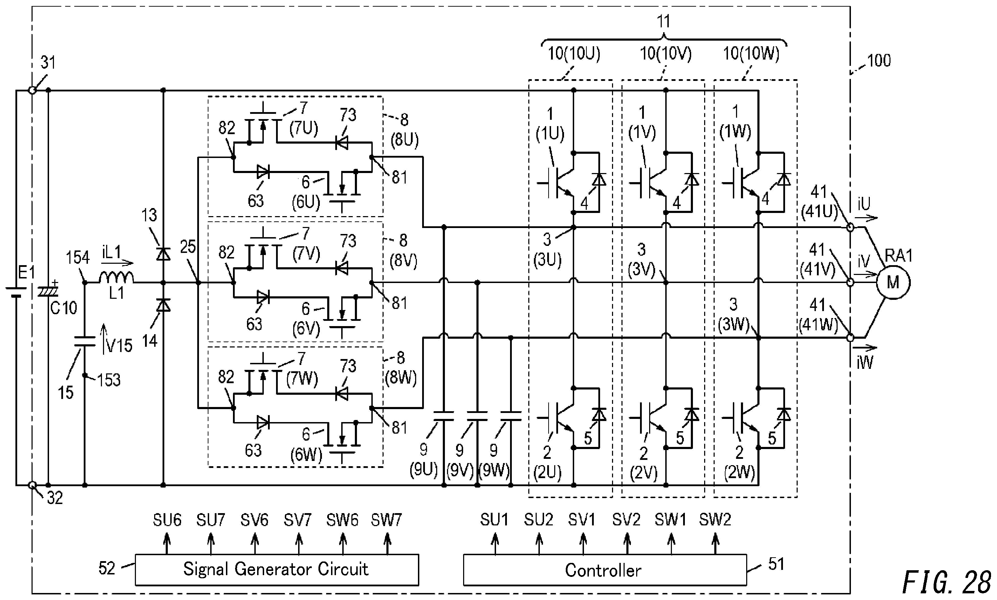

A power converter 100 according to an eighth embodiment will be described with reference to FIG. 28. FIG. 28 is a circuit diagram of a system including the power converter 100 according to the eighth embodiment. In the following description, any constituent element of the power converter 100 according to this eighth embodiment, having the same function as a counterpart of the power converter 100 (refer to FIG. 1) according to the first embodiment described above, will be designated by the same reference numeral as that counterpart's, and description thereof will be omitted herein.

In the power converter 100 according to the eighth embodiment, in each of the plurality of switches 8, each of the third switching element 6 and the fourth switching element 7 is implemented as a MOSFET, a diode 63 is connected to the third switching element 6 in series, and a diode 73 is connected to the fourth switching element 7 in series. In the power converter 100 according to the eighth embodiment, in each of the plurality of switches 8, a series circuit of the third switching element 6 and the diode 63 and a series circuit of the fourth switching element 7 and the diode 73 are connected to each other in antiparallel.

The power converter 100 according to the eighth embodiment achieves the same advantages as the power converter 100 according to the first embodiment.

### (Ninth embodiment)

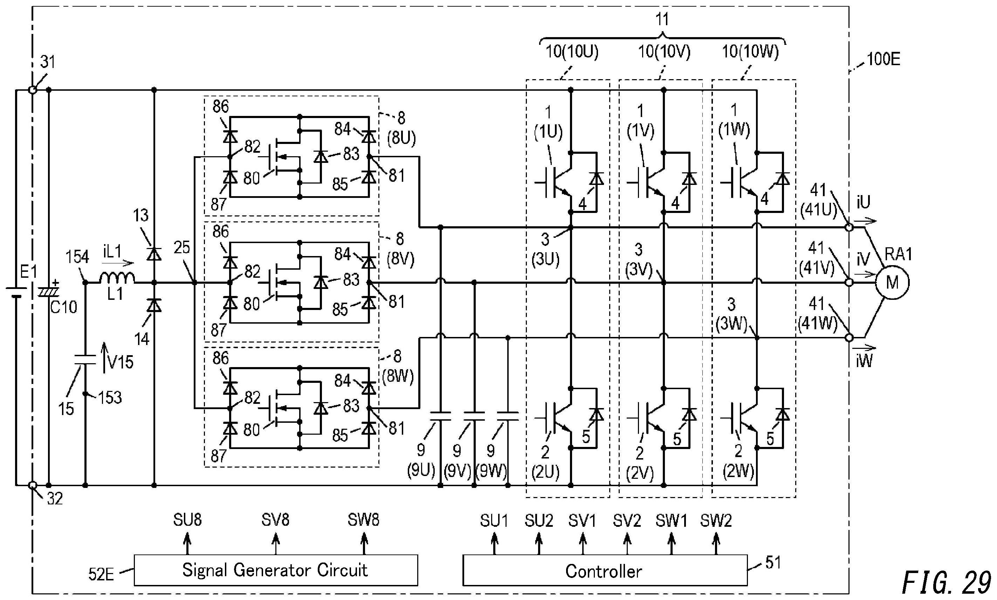

A power converter 100E according to a ninth embodiment will be described with reference to FIG. 29. FIG. 29 is a circuit diagram of a system including the power converter 100E according to the ninth embodiment. In the following description, any constituent element of the power converter 100E according to this ninth embodiment, having the same function as a counterpart of the power converter 100 (refer to FIG. 1) according to the first embodiment described above, will be designated by the same reference numeral as that counterpart's, and description thereof will be omitted herein.

In the power converter 100E according to the ninth embodiment, each of the plurality of switches 8 includes: a MOSFET 80; a diode 83 connected to the MOSFET 80 in antiparallel; a series circuit of two diodes 84, 85 connected to the MOSFET 80 in antiparallel; and a series circuit of two diodes 86, 87 connected to the MOSFET 80 in antiparallel. In each of the plurality of switches 8, a connection node between the diodes 84, 85 in the switch 8 (i.e., a first end 81 of the switch 8) is connected to the connection node 3 of a corresponding one of the plurality of switching circuits 10, and a connection node between the diodes 86, 87 (i.e., a second end 82 of the switch 8) is connected to the common connection node 25. In each of the switches 8, when the MOSFET 80 is ON, the switch 8 is ON. On the other hand, when the MOSFET 80 is OFF, the switch 8 is OFF.

The power converter 100E according to the ninth embodiment includes a signal generator circuit 52E instead of the signal generator circuit 52 (refer to FIGS. 1 and 2) of the power converter 100 according to the first embodiment.

The MOSFETs 80 of the plurality of switches 8 are controlled by the signal generator circuit 52E. The signal generator circuit 52E outputs a second control signal SU8 for controlling the ON/OFF states of the MOSFET 80 of the switch 8U, a second control signal SV8 for controlling the ON/OFF states of the MOSFET 80 of the switch 8V, and a second control signal SW8 for controlling the ON/OFF states of the MOSFET 80 of the switch 8W. The signal generator circuit 52E generates the second control signal SU8 using the first control signal SU1 and the first control signal SU2. The signal generator circuit 52E also generates the second control signal SV8 using the first control signal SV1 and the first control signal SV2. The signal generator circuit 52E further generates the second control signal SW8 using the first control signal SW1 and the first control signal SW2.

In each of the switches 8, when its MOSFET 80 is ON, a resonant current produced by a resonant circuit including the resonant inductor L1 and a corresponding one of the resonant capacitors 9 flows. In the power converter 100E according to the ninth embodiment, a charging current including the resonant current flows, when one of the plurality of switches 8 is ON, along the path passing through the regenerative capacitor 15, the resonant inductor L1, the diode 86, the MOSFET 80, the diode 85, and the resonant capacitor 9 in this order. Also, in the power converter 100E according to the ninth embodiment, a discharging current including the resonant current flows, when one of the plurality of switches 8 is ON, along the path passing through the resonant capacitor 9, the diode 84, the MOSFET 80, the diode 87, the resonant inductor L1, and regenerative capacitor 15 in this order.

The power converter 100E according to the ninth embodiment achieves the same advantages as the power converter 100 according to the first embodiment.

In the power converter 100E according to the ninth embodiment, each of the plurality of MOSFETs 80 may be replaced with an IGBT. Also, in the power converter 100E according to the ninth embodiment, each of the plurality of switches 8 may include, for example, a bipolar transistor or a GaN-based gate injection transistor (GIT) instead of the MOSFET 80.

### (Tenth embodiment)

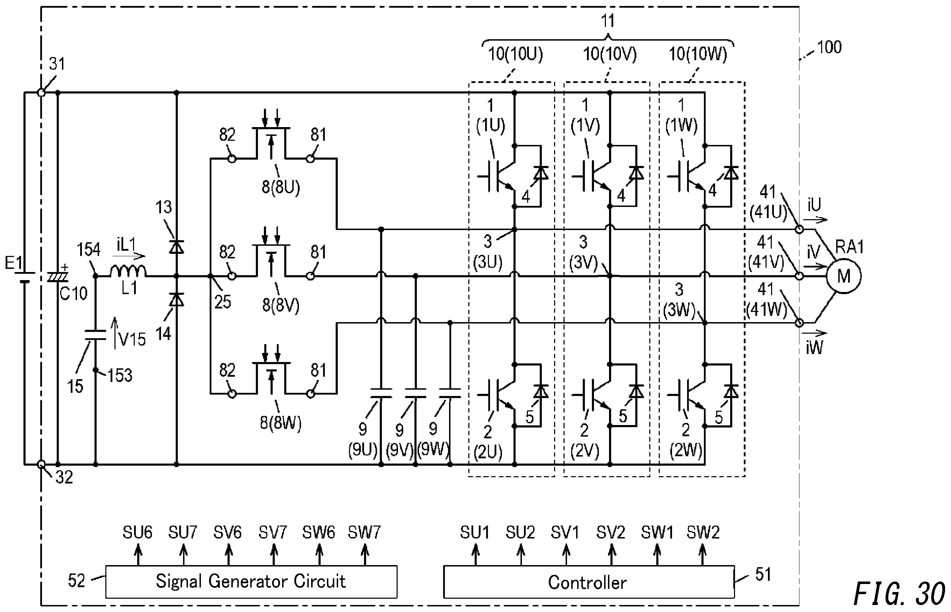

A power converter 100 according to a tenth embodiment will be described with reference to FIG. 30. FIG. 30 is a circuit diagram of a system including the power converter 100 according to the tenth embodiment. In the following description, any constituent element of the power converter 100 according to this tenth embodiment, having the same function as a counterpart of the power converter 100 (refer to FIG. 1) according to the first embodiment described above, will be designated by the same reference numeral as that counterpart's, and description thereof will be omitted herein.

In the power converter 100 according to the tenth embodiment, each of the plurality of switches 8 is a dual-gate GaN-based GIT including a first source terminal, a first gate terminal, a second gate terminal, and a second source terminal. In the power converter 100 according to the tenth embodiment, a second control signal SU6 is applied to between the first gate terminal and first source terminal of a dual-gate GaN-based GIT serving as the switch 8U, and a second control signal SU7 is applied to between the second gate terminal and the second source terminal thereof. In addition, a second control signal SV6 is applied to between the first gate terminal and first source terminal of a dual-gate GaN-based GIT serving as the switch 8V, and a second control signal SV7 is applied to between the second gate terminal and the second source terminal thereof. Furthermore, a second control signal SW6 is applied to between the first gate terminal and first source terminal of a dual-gate GaN-based GIT serving as the switch 8W, and a second control signal SW7 is applied to between the second gate terminal and the second source terminal thereof.

The power converter 100 according to the tenth embodiment achieves the same advantages as the power converter 100 according to the first embodiment.

### (Eleventh embodiment)

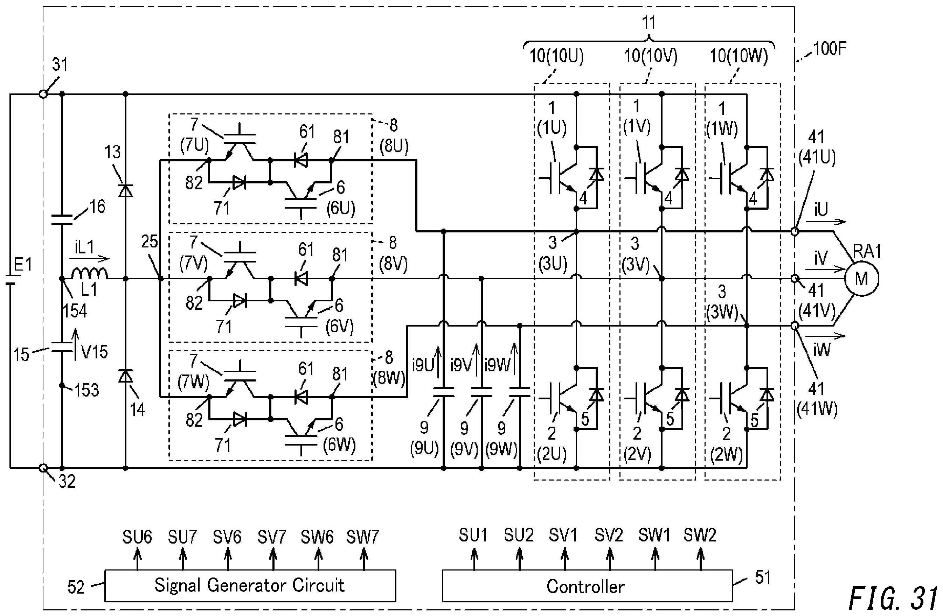

A power converter 100F according to an eleventh embodiment will be described with reference to FIG. 31. FIG. 31 is a circuit diagram of a system including the power converter 100F according to the eleventh embodiment. In the following description, any constituent element of the power converter 100F according to this eleventh embodiment, having the same function as a counterpart of the power converter 100 (refer to FIG. 1) according to the first embodiment described above, will be designated by the same reference numeral as that counterpart's, and description thereof will be omitted herein.

### (1) Configuration

The power converter 100F further includes another regenerative capacitor 16 (hereinafter sometimes referred to as a "second regenerative capacitor 16") connected between the sixth end 154 of the regenerative capacitor 15 (hereinafter sometimes referred to as a "first regenerative capacitor 15") and the first DC terminal 31, which is a difference from the power converter 100.

The second regenerative capacitor 16 is connected to the first regenerative capacitor 15 in series. Thus, in this power converter 100F, a series circuit of the second regenerative capacitor 16 and the first regenerative capacitor 15 is connected between the first DC terminal 31 and the second DC terminal 32. In this power converter 100F, a plurality of resonant inductors L1 are connected on the path between the first regenerative capacitor 15 and the second regenerative capacitor 16. The capacitance of the second regenerative capacitor 16 is equal to the capacitance of the first regenerative capacitor 15. As used herein, the expression "the capacitance of the second regenerative capacitor 16 is equal to the capacitance of the first regenerative capacitor 15" refers to not only a situation where the capacitance of the second regenerative capacitor 16 is exactly equal to the capacitance of the first regenerative capacitor 15 but also a situation where the capacitance of the second regenerative capacitor 16 is equal to or greater than 95% and equal to or less than 105% of the capacitance of the first regenerative capacitor 15 as well.

In the power converter 100F according to the eleventh embodiment, the voltage V15 across the first regenerative capacitor 15 (i.e., the potential at the sixth end 154 of the first regenerative capacitor 15) has a value calculated by dividing the voltage value Vd of the DC power supply E1 by two that is the number of the capacitors, namely, the second regenerative capacitor 16 and the first regenerative capacitor 15. Thus, the voltage V15 across the first regenerative capacitor 15 is approximately equal to Vd/2. In the power converter 100F according to the eleventh embodiment, the controller 51 may store in advance the value of the voltage V15 across the first regenerative capacitor 15.

### (2) Advantages

The controller 51 and signal generator circuit 52 of the power converter 100E according to the eleventh embodiment respectively operate in the same way as the controller 51 and signal generator circuit 52 of the power converter 100 according to the first embodiment. Thus, the power converter 100F according to the eleventh embodiment, as well as the power converter 100 according to the first embodiment, realizes zero-voltage soft switching without having the controller 51 directly control the plurality of switches 8 provided for the purpose of making zero-voltage soft switching.

### (Twelfth embodiment)

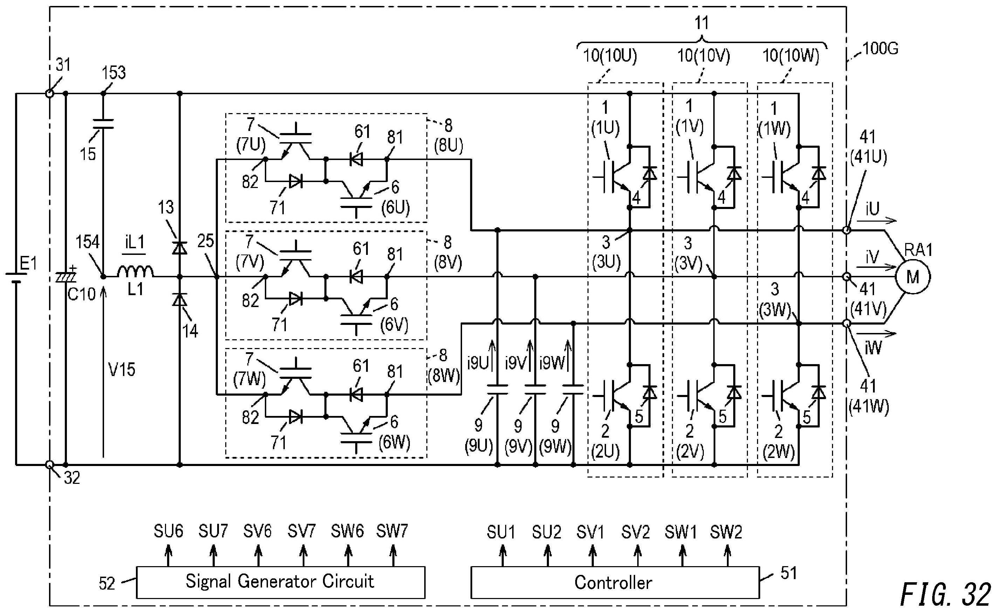

A power converter 100G according to a twelfth embodiment will be described with reference to FIG. 32. FIG. 32 is a circuit diagram of a system including the power converter 100G according to the twelfth embodiment. In the following description, any constituent element of the power converter 100G according to this twelfth embodiment, having the same function as a counterpart of the power converter 100 (refer to FIG. 1) according to the first embodiment described above, will be designated by the same reference numeral as that counterpart's, and description thereof will be omitted herein.

### (1) Configuration

In this power converter 100G, the sixth end 154 of the regenerative capacitor 15 is connected to the first DC terminal 21, which is a difference from the power converter 100.

### (2) Operation

The controller 51 and signal generator circuit 52 of the power converter 100G according to the twelfth embodiment respectively operate in the same way as the controller 51 and signal generator circuit 52 of the power converter 100 according to the first embodiment described above.

### (3) Advantages

The power converter 100G according to the twelfth embodiment, as well as the power converter 100 according to the first embodiment, realizes zero-voltage soft switching without having the controller 51 directly control the plurality of switches 8 provided for the purpose of making zero-voltage soft switching.

### (Thirteenth embodiment)

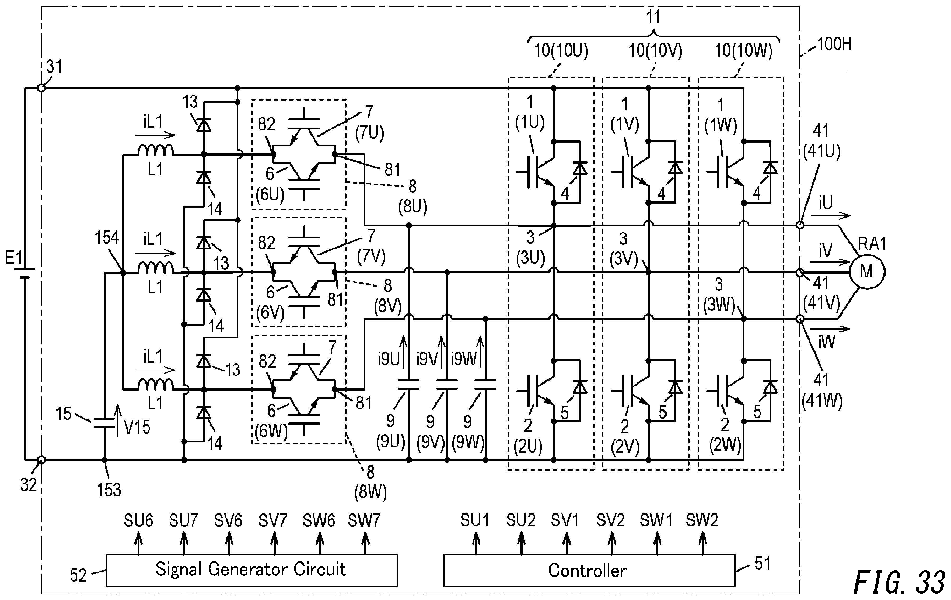

A power converter 100H according to a thirteenth embodiment will be described with reference to FIG. 33. FIG. 33 is a circuit diagram of a system including the power converter 100H according to the thirteenth embodiment. In the following description, any constituent element of the power converter 100H according to this thirteenth embodiment, having the same function as a counterpart of the power converter 100 (refer to FIG. 1) according to the first embodiment described above, will be designated by the same reference numeral as that counterpart's, and description thereof will be omitted herein.

### (1) Configuration

The power converter 100H includes a plurality of (e.g., three in the example illustrated in FIG. 33) resonant inductors L1, which is a difference from the power converter 100 according to the first embodiment. In addition, the power converter 100H includes a plurality of (e.g., three in the example illustrated in FIG. 33) first clamping diodes 13 and a plurality of (e.g., three in the example illustrated in FIG. 33) second clamping diodes 14, which is another difference from the power converter 100 according to the first embodiment.

The respective fourth ends of the plurality of resonant inductors L1 are connected to the sixth end 154 of the regenerative capacitor 15. The inductances of the plurality of resonant inductors L1 are equal to each other. That is to say, the inductances of the three resonant inductors L1 are equal to each other. As used herein, the expression "the inductances of the three resonant inductors L1 are equal to each other" refers to not only a situation where the inductances of two out of the three resonant inductors L1 are exactly equal to the inductance of the other resonant inductor L1 but also a situation where the inductances of the two resonant inductors L1 are equal to or greater than 95% and equal to or less than 105% of the inductance of the other resonant inductor L1 as well.

The plurality of first clamping diodes 13 are provided one to one for the plurality of resonant inductors L1. Each of the plurality of first clamping diodes 13 has an anode connected to the third end of a corresponding one of the plurality of resonant inductors L1 and has a cathode connected to the first DC terminal 31.

The plurality of second clamping diodes 14 are provided one to one for the plurality of resonant inductors L1. Each of the plurality of second clamping diodes 14 has a cathode connected to the third end of a corresponding one of the plurality of resonant inductors L1 and has an another connected to the second DC terminal 32.

### (2) Operation

The power converter 100H according to the thirteenth embodiment operates in the same way as the power converter 100 according to the first embodiment, and therefore, description thereof will be omitted herein.

### (3) Advantages

The power converter 100H according to the thirteenth embodiment, as well as the power converter 100 according to the first embodiment, realizes zero-voltage soft switching without having the controller 51 directly control the plurality of switches 8.

### (Fourteenth embodiment)

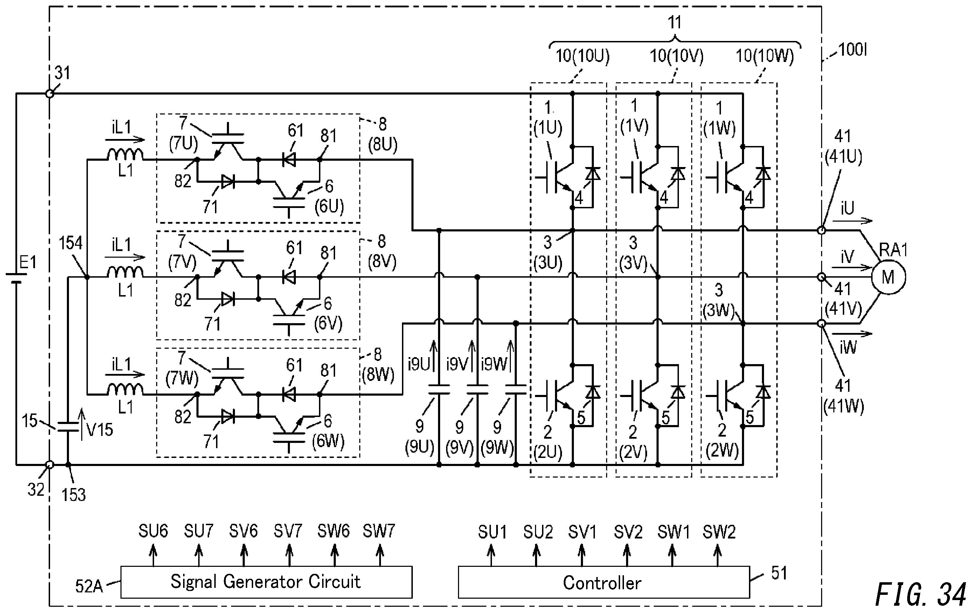

A power converter 100I according to a fourteenth embodiment will be described with reference to FIG. 34. FIG. 34 is a circuit diagram of a system including the power converter 100I according to the fourteenth embodiment. In the following description, any constituent element of the power converter 100I according to this fourteenth embodiment, having the same function as a counterpart of the power converter 100A (refer to FIG. 12) according to the second embodiment described above, will be designated by the same reference numeral as that counterpart's, and description thereof will be omitted herein.

### (1) Configuration

The power converter 100I includes a plurality of (e.g., three in the example illustrated in FIG. 34) resonant inductors L1, which is a difference from the power converter 100A according to the second embodiment.

The respective fourth ends of the plurality of resonant inductors L1 are connected to the sixth end 154 of the regenerative capacitor 15. The inductances of the plurality of resonant inductors L1 are equal to each other. That is to say, the inductances of the three resonant inductors L1 are equal to each other. As used herein, the expression "the inductances of the three resonant inductors L1 are equal to each other" refers to not only a situation where the inductances of two out of the three resonant inductors L1 are exactly equal to the inductance of the other resonant inductor L1 but also a situation where the inductances of the two resonant inductors L1 are equal to or greater than 95% and equal to or less than 105% of the inductance of the other resonant inductor L1 as well.

### (2) Operation

The power converter 100I according to the fourteenth embodiment operates in the same way as the power converter 100A according to the second embodiment, and therefore, description thereof will be omitted herein.

### (3) Advantages

The power converter 100I according to the fourteenth embodiment, as well as the power converter 100A according to the second embodiment, realizes zero-voltage soft switching without having the controller 51 directly control the plurality of switches 8 provided for the purpose of making zero-voltage soft switching.

### (Variations)

Note that the first to fourteenth embodiments and their variations described above are only exemplary ones of various embodiments of the present disclosure and their variations and should not be construed as limiting. Rather, the first to fourteenth exemplary embodiments and their variations may be readily modified in various manners depending on a design choice or any other factor without departing from the scope of the present disclosure.

For example, the signal generator circuit 52, 52A, 52E may be configured to generate a second control signal using at least one of the first control signal for the first switching element 1 of a corresponding one of the plurality of switching circuits 10 or the first control signal for the second switching element 2 thereof with respect to each of the plurality of switches 8.

In the power converter 100 according to the first embodiment, the diodes 61 and 71 do not have to be provided as external elements for the third switching element 6 and the fourth switching element 7, respectively, but may also be elements built in one chip.

Also, in the power converters 100A-100D according to the second through fifth embodiments, the switches 8 have the same configuration as the switches 8 of the power converter 100 according to the first embodiment, but may also have the same configuration as the switches 8 according to any one of the sixth through tenth embodiments.

Optionally, in the power converters 100 and 100A-100I, if each of the plurality of resonant capacitors 9 has a relatively small capacitance, then the parasitic capacitors across the plurality of second switching elements 2 may also serve as the plurality of resonant capacitors 9 instead of providing the plurality of resonant capacitors 9 as separate elements.

Furthermore, the length of the first dead time period Td1 is set to be equal to the length of the resonant half cycle in the embodiments described above but may also be set to be different from the length of the resonant half cycle.

Furthermore, the power converters 100 and 100A-100I do not have to be configured to output three-phase AC power but may also be configured to output multi-phase AC power in more than three phases.

### (Aspects)

The foregoing description provides specific implementations for the following aspects of the present disclosure.

A power converter (100; 100A; 100B; 100C; 100D; 100E; 100F; 100G; 100H; 100I) according to a first aspect includes a first DC terminal (31) and a second DC terminal (32), a power converter circuit (11), a plurality of AC terminals (41), a plurality of switches (8), a plurality of resonant capacitors (9), at least one resonant inductor (L1), a regenerative capacitor (15), a controller (51; 51B; 51D), and a signal generator circuit (52; 52A; 52E). The power converter circuit (11) includes a plurality of first switching elements (1) and a plurality of second switching elements (2). In the power converter circuit (11), a plurality of switching circuits (10), in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31). In the power converter circuit (11), the plurality of second switching elements (2) are connected to the second DC terminal (32). The plurality of AC terminals (41) are provided one to one for the plurality of switching circuits (10). Each of the plurality of AC terminals (41) is connected to a connection node (3) between the first switching element (1) and the second switching element (2) of a corresponding one of the plurality of switching circuits (10). Each of the plurality of AC terminals (41) causes a load current to flow therethrough. The plurality of switches (8) are provided one to one for the plurality of switching circuits (10). Each of the plurality of switches (8) has a first end (81) and a second end (82). Each of the plurality of switches (8) has the first end (81) thereof connected to the connection node (3) between the first switching element (1) and the second switching element (2) of a corresponding one of the plurality of switching circuits (10). The plurality of resonant capacitors (9) are provided one to one for the plurality of switches (8). Each of the plurality of resonant capacitors (9) is connected between the first end (81) of a corresponding one of the plurality of switches (8) and the second DC terminal (32). The at least one resonant inductor (L1) has a third end and a fourth end. In the at least one resonant inductor (L1), the third end thereof is connected to the second end (82) of a corresponding one of the plurality of switches (8). The regenerative capacitor (15) has a fifth end (153) and a sixth end (154). In the regenerative capacitor (15), the fifth end (153) thereof is connected to the second DC terminal (32), and the sixth end (154) thereof is connected to the fourth end of the at least one resonant inductor (L1). The controller (51; 51B; 51D) applies a first control signal, of which a potential level alternates between high level and low level, to each of the plurality of first switching elements (1) and the plurality of second switching elements (2). The signal generator circuit (52; 52A; 52E) applies a second control signal, of which a potential level alternates between high level and low level, to each of the plurality of switches (8). The controller (51; 51B; 51D) sets, with respect to each of the plurality of switching circuits (10), a second dead time period (Td2) between a high-level period of the first control signal for the first switching element (1) and a high-level period of the first control signal for the second switching element (2). The second dead time period (Td2) is defined by adding a predetermined amount of time (additional time Tad) to a first dead time period (Td1). The first dead time period (Td1) has been set in advance to prevent respective ON periods of the first switching element (1) and the second switching element (2) from overlapping with each other. The predetermined amount of time (Tad) is determined based on a current value of the load current, inductance of the resonant inductor (L1), and a voltage value of the regenerative capacitor (15). The signal generator circuit (52; 52A; 52E) generates, with respect to each of the plurality of switches (8), the second control signal having a high-level period adapted to the second dead time period (Td2) for a corresponding one of the plurality of switching circuits (10).

This aspect allows for realizing zero-voltage soft switching without having the controller (51; 51B; 51D) directly control a plurality of switches (8) provided for the purpose of making zero-voltage soft switching.

A power converter (100; 100A; 100C; 100E; 100F; 100G; 100H; 100I) according to a second aspect, which may be implemented in conjunction with the first aspect, further includes a first clamping diode (13) and a second clamping diode (14). The first clamping diode (13) has an anode connected to the third end of the at least one resonant inductor (L1) and a cathode connected to the first DC terminal (31). The second clamping diode (14) has a cathode connected to the third end of the at least one resonant inductor (L1) and an anode connected to the second DC terminal (32). When setting the second deadtime period (Td2) with respect to each of the plurality of switching circuits (10), the controller (51) adds, if the polarity of the load current is positive, the predetermined amount of time (additional time Tad) to the first deadtime period (Td1) by shortening the high-level period of the first control signal for the second switching element (2), and adds, if the polarity of the load current is negative, the predetermined amount of time (additional time Tad) to the first deadtime period (Td1) by shortening the high-level period of the first control signal for the first switching element (1).

This aspect allows for realizing zero-voltage soft switching while further reducing the dead time loss and the dead time error.

In a power converter (100D) according to a third aspect, which may be implemented in conjunction with the first aspect, when setting the second deadtime period (Td2) with respect to each of the plurality of switching circuits (10), the controller (51D) adds, if the polarity of the load current is positive, the predetermined amount of time (Ta11 + Ta21) to the first deadtime period (Td1) by advancing an end time of the high-level period of the first control signal for the second switching element (2) and postponing a beginning time of the high-level period of the first control signal for the first switching element (1), and adds, if the polarity of the load current is negative, the predetermined amount of time (Ta12 + Ta22) to the first deadtime period (Td1) by advancing an end time of the high-level period of the first control signal for the first switching element (1) and postponing a beginning time of the high-level period of the first control signal for the second switching element (2).

This aspect allows for realizing zero-voltage soft switching while reducing dead time loss and a dead time error.

In a power converter (100C) according to a fourth aspect, which may be implemented in conjunction with the first aspect, when setting the second deadtime period (Td2) with respect to each of the plurality of switching circuits (10), the controller (51B) adds, if the polarity of the load current is positive, the predetermined amount of time (additional time Tad) to the first deadtime period (Td1) by shortening the high-level period of the first control signal for the first switching element (1), and adds, if the polarity of the load current is negative, the predetermined amount of time (additional time Tad) to the first deadtime period (Td1) by shortening the high-level period of the first control signal for the second switching element (2).

This aspect allows for realizing zero-voltage soft switching.

In a power converter (100; 100A; 100B; 100C; 100D; 100E; 100F; 100G; 100H; 100I) according to a fifth aspect, which may be implemented in conjunction with any one of the first to fourth aspects, the signal generator circuit (52; 52A; 52E) generates the second control signal for each of the plurality of switches (8) using at least one of the first control signal for the first switching element (1) of a corresponding one of the plurality of switching circuits (10) or the first control signal for the second switching element (2) of the corresponding one of the plurality of switching circuits (10).

This aspect may contribute to simplifying the configuration of the signal generator circuit (52; 52A; 52E).

In a power converter (100; 100A; 100B; 100C; 100D; 100E; 100F; 100G) according to a sixth aspect, which may be implemented in conjunction with any one of the first to fifth aspects, the at least one resonant inductor (L1) is a single resonant inductor (L1). The respective second ends (82) of the plurality of switches (8) are connected in common to the single resonant inductor (L1).

This aspect may contribute to downsizing because the number of resonant inductors (L1) provides may be reduced to one.

### Industrial Applicability

A power converter according to the present disclosure allows for realizing zero-voltage soft switching without having its controller directly control a plurality of switches provided for the purpose of making zero-voltage soft switching. Therefore, the power converter according to the present disclosure is effectively applicable to various fields on an industrial basis.

### Reference Signs List

1 First Switching Element
2 Second Switching Element
3 Connection Node
4 First Diode
5 Second Diode
6 Third Switching Element
7 Fourth Switching Element
8 Switch
81 First End
82 Second End
9 Resonant Capacitor
10 Switching Circuit
13 First Clamping Diode
14 Second Clamping Diode
11 Power Converter Circuit
15 Regenerative Capacitor
153 Fifth End
154 Sixth End
31 First DC Terminal
32 Second DC Terminal
41 AC Terminal
51, 51B, 51D Controller
52, 52A, 52E Signal Generator Circuit
100, 100A, 100B, 100C, 100D, 100E, 100F, 100G, 100H, 100I Power Converter
iU, iV, iW Output Current (Load Current)
L1 Resonant Inductor
RA1 AC Load
SU1, SU2, SV1, SV2, SW1, SW2 First Control Signal
SU6, SU7, SU8, SV6, SV7, SV8, SW6, SW7, SW8 Second Control Signal
Ta11 Time
Ta12 Time
Ta21 Time
Ta22 Time
Tad Additional Time
Td1 First Dead Time Period
Td2 Second Dead Time Period
V15 Voltage

## Claims

1. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, each of the plurality of AC terminals being connected to a connection node between the first switching element and the second switching element of a corresponding one of the plurality of switching circuits, each of the plurality of AC terminals causing a load current to flow therethrough;
a plurality of switches provided one to one for the plurality of switching circuits, each of the plurality of switches having a first end and a second end, each of the plurality of switches having the first end thereof connected to the connection node between the first switching element and the second switching element of a corresponding one of the plurality of switching circuits;
a plurality of resonant capacitors provided one to one for the plurality of switches, each of the plurality of resonant capacitors being connected between the first end of a corresponding one of the plurality of switches and the second DC terminal;
at least one resonant inductor having a third end and a fourth end, the third end of the at least one resonant inductor being connected to the second end of a corresponding one of the plurality of switches;
a regenerative capacitor having a fifth end and a sixth end, the fifth end of the regenerative capacitor being connected to the second DC terminal, the sixth end of the regenerative capacitor being connected to the fourth end of the at least one resonant inductor;
a controller configured to apply a first control signal, of which a potential level alternates between high level and low level, to each of the plurality of first switching elements and the plurality of second switching elements; and
a signal generator circuit configured to apply a second control signal, of which a potential level alternates between high level and low level, to each of the plurality of switches,
the controller being configured to set, with respect to each of the plurality of switching circuits, a second dead time period between a high-level period of the first control signal for the first switching element and a high-level period of the first control signal for the second switching element, the second dead time period being defined by adding a predetermined amount of time to a first dead time period, the first dead time period having been set in advance to prevent respective ON periods of the first switching element and the second switching element from overlapping with each other,
the predetermined amount of time being determined based on a current value of the load current, inductance of the at least one resonant inductor, and a voltage value of the regenerative capacitor, and
the signal generator circuit being configured to generate, with respect to each of the plurality of switches, the second control signal having a high-level period adapted to the second dead time period for a corresponding one of the plurality of switching circuits.

2. The power converter of claim 1, further comprising:
a first clamping diode having an anode connected to the third end of the at least one resonant inductor and a cathode connected to the first DC terminal, and
a second clamping diode having a cathode connected to the third end of the at least one resonant inductor and an anode connected to the second DC terminal, wherein
the controller is configured to, when setting the second dead time period with respect to each of the plurality of switching circuits,
add, when polarity of the load current is positive, the predetermined amount of time to the first dead time period by shortening the high-level period of the first control signal for the second switching element, and
add, when polarity of the load current is negative, the predetermined amount of time to the first dead time period by shortening the high-level period of the first control signal for the first switching element.

3. The power converter of claim 1, wherein
the controller is configured to, when setting the second dead time period with respect to each of the plurality of switching circuits,
add, when polarity of the load current is positive, the predetermined amount of time to the first dead time period by advancing an end time of the high-level period of the first control signal for the second switching element and postponing a beginning time of the high-level period of the first control signal for the first switching element, and
add, when polarity of the load current is negative, the predetermined amount of time to the first dead time period by advancing an end time of the high-level period of the first control signal for the first switching element and postponing a beginning time of the high-level period of the first control signal for the second switching element.

4. The power converter of claim 1, wherein
the controller is configured to, when setting the second dead time period with respect to each of the plurality of switching circuits,
add, when polarity of the load current is positive, the predetermined amount of time to the first dead time period by shortening the high-level period of the first control signal for the first switching element, and
add, when polarity of the load current is negative, the predetermined amount of time to the first dead time period by shortening the high-level period of the first control signal for the second switching element.

5. The power converter of any one of claims 1 to 4, wherein
the signal generator circuit is configured to generate the second control signal for each of the plurality of switches using at least one of the first control signal for the first switching element of a corresponding one of the plurality of switching circuits or the first control signal for the second switching element of the corresponding one of the plurality of switching circuits.

6. The power converter of any one of claims 1 to 5, wherein
the at least one resonant inductor is a single resonant inductor, and
the respective second ends of the plurality of switches are connected in common to the single resonant inductor.
